(19) Europäisches Patentamt
European Patent Office
Office européen des brevets

(11) EP 0 858 476 B1

(12) **EUROPÄISCHE PATENTSCHRIFT**

(45) Veröffentlichungstag und Bekanntmachung des Hinweises auf die Patenterteilung:
**20.04.2005 Patentblatt 2005/16**

(21) Anmeldenummer: **96934789.7**

(22) Anmeldetag: **23.10.1996**

(51) Int Cl.⁷: **C08J 9/14**, C08J 9/06
// C08L45:00

(86) Internationale Anmeldenummer:
**PCT/EP1996/004593**

(87) Internationale Veröffentlichungsnummer:
**WO 1997/016476 (09.05.1997 Gazette 1997/20)**

# (54) POLYMERE SCHÄUME

POLYMER FOAMS

MOUSSES POLYMERES

(84) Benannte Vertragsstaaten:
**DE FR GB IT**

(30) Priorität: **30.10.1995 DE 19540356**
**17.05.1996 DE 19619813**

(43) Veröffentlichungstag der Anmeldung:
**19.08.1998 Patentblatt 1998/34**

(73) Patentinhaber: **Ticona GmbH**
**65451 Kelsterbach (DE)**

(72) Erfinder:
- **HATKE, Wilfried**
  **D-65719 Hofheim (DE)**
- **HELMER-METZMANN, Freddy**
  **D-55270 Essenheim (DE)**
- **JACOBS, Alexandra**
  **D-65527 Niedernhausen (DE)**

(56) Entgegenhaltungen:
**JP-A- 6 145 408**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 858 476 B1

Printed by Jouve, 75001 PARIS (FR)

## Beschreibung

Die vorliegende Erfindung bezieht sich auf Schäume, die Cycloolefincopolymere enthalten.

Es ist bekannt, daß polymere Materialien unter Zusatz fester, flüssiger oder gasförmiger Treibmittel verschäumt werden können. Als Treibmittel werden feste Substanzen wie Azoverbindungen, flüssige Treibmittel wie Kohlenwasserstoffe, halogenierte Kohlenwasserstoffe und gasförmige Treibmittel wie Stickstoff eingesetzt. Ebenfalls ist bekannt, daß Polymere wie Polystyrol und Polyolefine (z.B. Polyethylen, Polypropylen) zu vielseitig anwendbaren Schäumen verarbeitet werden können.

Der Vorteil von polymeren Schaumstoffen liegt in ihrer im Vergleich zum ungeschäumten Ausgangsmaterial geringeren Dichte wie auch in den von Material und Verarbeitung abhängigen isolierenden oder dämpfenden Eigenschaften. Die genannten Materialien weisen eine maximale Dauergebrauchstemperatur von bis zu 100°C auf (Handbook of polymeric foams, Hrsg. D. Klempner, K.C. Frisch, Hanser Verlag 1991, Ullmann's Encyclopedia of Industrial Chemistry), so daß sie für den Einsatz bei höherer Temperatur nicht geeignet sind.

Um Materialien mit einer höheren Wärmeformbeständigkeit bei gleichzeitig guter Chemikalien- und Hydrolysebeständigkeit zu erhalten, werden daher Polymere vorgeschlagen, die Cycloolefine enthalten. In DD-PS 223 157 werden Hartschäume aus Norbornen-Ethylen-Copolymeren mit einer Dauerwärmeformbeständigkeit bis 410 K und Resistenz gegenüber heißen aggressiven wäßrigen Medien beschrieben.

Aus der JP-A-6/145,408 sind Schäume aus Copolymeren von Cycloolefinen und $\alpha$-Olefinen bekannt, die mit bestimmten Vanadium-Katalysatoren unter Ringöffnung hergestellt wurden.

In EP-A-384 693 sind ebenfalls Schäume von Polymeren beschrieben, die Cycloolefine enthalten. Hierbei sind Strukturen umfaßt, die durch ringöffnende Polymerisation hergestellt werden, und solche, die unter Verwendung eines Katalysators, bestehend aus einer Vanadium-Verbindung und einer Organoaluminium-Verbindung, erhalten werden. Letztere sind Copolymere des cyclischen Olefins mit Ethen. In verschiedenen Beispielen konnten Wärmeformbeständigkeiten von bis zu 115°C nachgewiesen werden.

In EP-A-427 567 sind Polyolefine genannt, die Anwendung als tragende Schicht in einer Parabolantenne finden und aufgeschäumt werden können. Polar modifizierte Polymere können durch Polymerisation mit Metallocenkatalysatoren hergestellt werden.

Die Aufgabe der vorliegenden Erfindung besteht darin, einen Schaum bereitzustellen, der bei Anwendung in Hochtemperaturbereichen wie auch in Bereichen, wo über verhältnismäßig kurze Zeit hohe Temperaturen auftreten können, höhere Wärmeformbeständigkeiten bei gleichzeitig guten mechanischen Eigenschaften aufweist. Eine weitere Aufgabe der vorliegenden Erfindung besteht darin, ein umweltfreundliches und wirtschaftliches Verfahren zur Herstellung eines Schaums bereitzustellen.

Die Aufgabe der vorliegenden Erfindung wird durch einen Schaum, der Cycloolefincopolymere enthält, gelöst. Die vorliegende Erfindung bezieht sich auf einen Schaum, enthaltend mindestens ein Cycloolefincopolymer, welches zu 20 bis 99 Gew.% polymerisierte Einheiten enthält, die sich ableiten einem oder mehreren von cyclischen, insbesondere polycyclischen Olefin, wobei das Cycloolefinpolymer eine ausgewählte Mikrostruktur aufweist, die gekennzeichnet ist durch

a) einen intrinsischen E-Modul $E_i$, der eine Abhängigkeit von der Glastemperatur $T_g$ des Cycloolefinpolymeren nach der Beziehung

$$E_i = (0{,}0025\ [Gpa/°C] \times T_g\ [°C] + B\ [Gpa]$$

aufweist, worin B 2,93 bis 3,19 beträgt, oder durch
b) einen mechanischen tan$\delta$ Wert von >0,014 bei einer Temperatur 30°C unterhalb der Glastemperatur, oder durch
c) eine Schmelztemperatur des Cycloolefincopolymeren oberhalb von 200°C.

Der Begriff Cycloolefincopolymer umfaßt sowohl Cycloolefincopolymere wie auch Cycloolefinhomopolymere.

Der erfindungsgemäße Schaum wird hergestellt ausgehend von einem verschäumbaren Material. Dieses verschäumbare Material enthält 15 bis 99,99 Gew.-%, bevorzugt 50 bis 99,99 Gew.-%, besonders bevorzugt 80 bis 99,99 Gew.-% eines oder mehrerer Cycloolefincopolymere.

Das in dem verschäumbaren Material enthaltene Cycloolefincopolymer kann polymerisierte Einheiten enthalten, die sich von mindestens einem cyclischen, insbesondere polycyclischen Olefin und mindestens einem acyclischen Olefin ableiten. Die cyclischen, insbesondere polycyclischen Olefine weisen vorzugsweise 5 bis 50, insbesondere 5 bis 30 Kohlenstoffatome auf. Die acyclischen Olefine sind bevorzugt $\alpha$-Olefine mit 2 bis 40 Kohlenstoffatomen.

Der Anteil der polymerisierten Einheiten, die sich ableiten von cyclischen, insbesondere polycyclischen Olefinen, beträgt 20 bis 95 Gew.-%, bezogen auf die Gesamtmasse des Cycloolefincopolymers. Der Anteil der polymerisierten Einheiten, die sich ableiten von acyclischen Olefinen beträgt 5 bis 80 Gew.-%, besonders bevorzugt 10 bis 60 Gew.-%, bezogen auf die Gesamtmasse des Cycloolefincopolymers.

Die Erfindung betrifft bevorzugt einen Schaum, enthaltend mindestens ein Cycloolefincopolymer, welches 20 bis 95 Gew.-%, bevorzugt 60 bis 99 Gew.-%, bezogen auf die Gesamtmasse des Cycloolefincopolymers, polymerisierte Einheiten enthält, welche sich ableiten von einem oder mehreren polycyclischen Olefinen der Formeln I, II, III, IV, V oder VI,

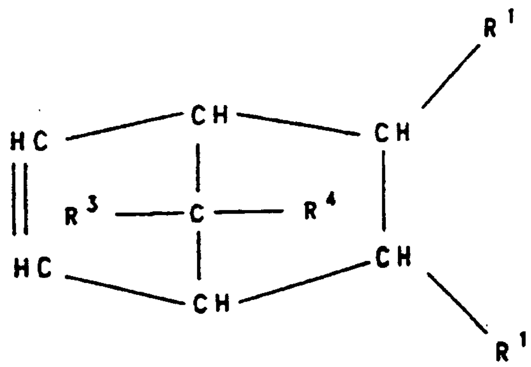

(I),

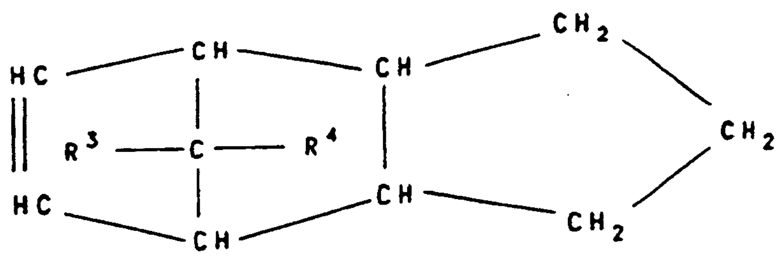

(II),

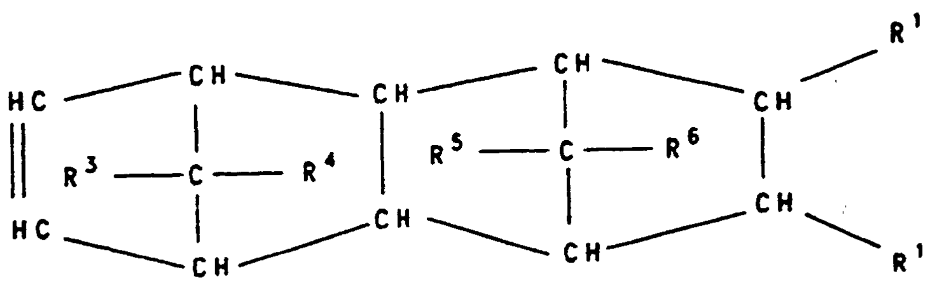

(III),

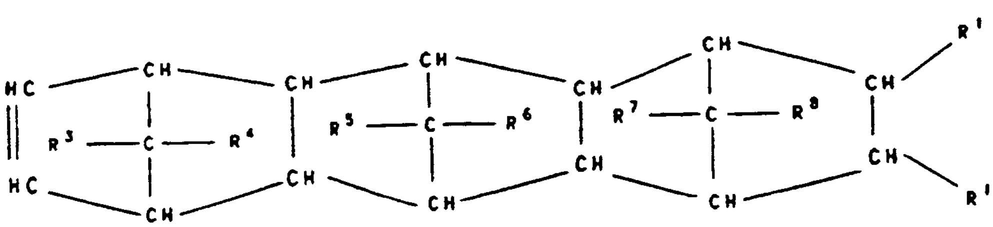

(IV),

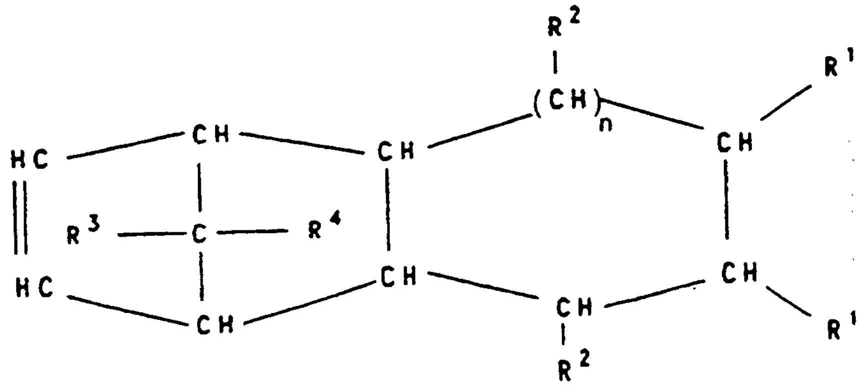

(V).

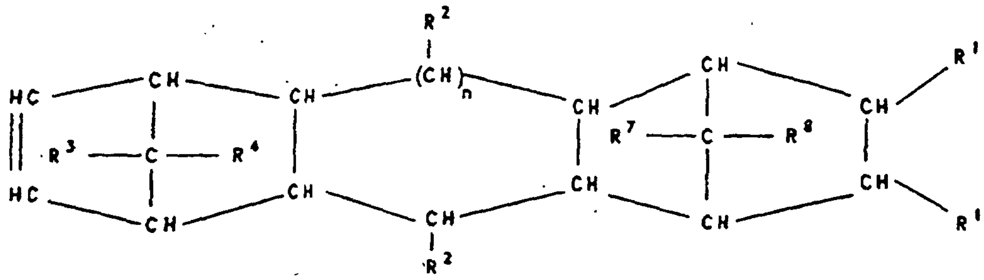

(VI).

worin $R^1$, $R^2$, $R^3$, $R^4$, $R^5$, $R^6$, $R^7$ und $R^8$ gleich oder verschieden sind und ein Wasserstoffatom, einen linearen oder verzweigten, gesättigten oder ungesättigten $C_1$-$C_{20}$-Alkylrest, $C_6$-$C_{18}$-Arylrest, $C_7$-$C_{20}$-Alkylenarylrest, einen cyclischen oder acyclischen $C_2$-$C_{20}$-Alkenylrest bedeuten, oder einen gesättigten, ungesättigten oder aromatischen Ring bilden, wobei gleiche Reste $R^1$ bis $R^8$ in den verschiedenen Formeln I bis VI eine unterschiedliche Bedeutung haben können, worin n Werte von 0 bis 5 annehmen kann, und 5 bis 80 Gew.-%, bezogen auf die Gesamtmasse des Cycloolefincopolymers, polymerisierte Einheiten, welche sich ableiten von einem oder mehreren acyclischen Olefinen der Formel VII

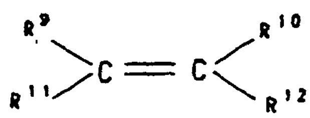

(VII),

worin $R^9$, $R^{10}$, $R^{11}$ und $R^{12}$ gleich oder verschieden sind und ein Wasserstoffatom, einen linearen, verzweigten, gesättigten oder ungesättigten $C_1$-$C_{20}$-Kohlenwasserstoffrest oder einen $C_6$-$C_{18}$-Arylrest bedeuten.

Außerdem kann das in dem erfindungsgemäßen Schaum enthaltene Cycloolefincopolymer gegabenenfalls polymerisierte Einheiten enthalten, welche sich ableiten von einem oder mehreren monocyclischen Olefinen der Formel VIII

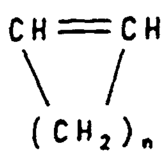

(VIII),

worin n eine Zahl von 2 bis 10 ist.

Der Schaum kann einen oder mehrere Hohlräume enthalten, die ein oder mehrere gasförmige Stoffe enthalten können. Die Hohlräume können geschlossene und offene Zellen sein.

Bevorzugt bestehen die in dem erfindungsgemäßen Schaum enthaltenen Cycloolefincopolymere aus polymerisierten Einheiten, die sich ableiten von einem oder mehreren polycyclischen Olefinen, insbesondere polycyclischen Olefinen der Formeln I oder III, und polymerisierten Einheiten, die sich ableiten von einem oder mehreren acyclischen Olefinen der Formel VII, insbesondere α-Olefinen mit 2 bis 20 C-Atomen. Insbesondere sind Cycloolefincopolymere bevorzugt, die aus polymerisierten Einheiten bestehen, die sich ableiten von einem polycyclischen Olefin der Formel I oder III und einem acyclischen Olefin der Formel VII. Weiterhin bevorzugt sind Terpolymere, die aus polymerisierten Einheiten bestehen, die sich ableiten von einem polycyclischen Monoolefin der Formel I oder III, einem acyclischen Monoolefin der Formel VII und einem cyclischen oder acyclischen Olefin, welches mindestens zwei Doppelbindungen enthält (Polyen), insbesondere cyclische, bevorzugt polycyclische Diene wie Norbornadien oder cyclische, besonders bevorzugt polycyclische Alkene, die einen $C_2$-$C_{20}$-Alkenylrest tragen wie Vinylnorbornen.

Bevorzugt enthalten die in dem erfindungsgemäßen Schaum enthaltenen Cycloolefincopolymere Olefine mit Norbornengrundstruktur, besonders bevorzugt Norbornen, Tetracyclododecen und gegebenenfalls Vinylnorbornen oder Norbornadien. Bevorzugt sind auch Cycloolefincopolymere, die polymerisierte Einheiten enthalten, die sich ableiten von acyclischen Olefinen mit endständigen Doppelbindungen wie α-Olefinen mit 2 bis 20 C-Atomen, besonders bevorzugt Ethylen oder Propylen. Besonders bevorzugt sind Norbornen/Ethylen- und Tetracyclododecen/Ethylen-Copolymere.

Bei den Terpolymeren sind besonders bevorzugt Norbornen/Vinylnorbonen/Ethylen-, Norbornen/Norbornadien/Ethylen-, Tetracyclododecen/Vinylnorbornen/Ethylen-, Tetracyclododecen/Vinyltetracyclododecen/Ethylen-Terpolymere. Der Anteil der polymerisierten Einheiten, die sich ableiten von einem Polyen, bevorzugt Vinylnorbornen oder Norbornadien, liegt bei 0 bis 50 Gew.-%, vorzugsweise bei 0 bis 20 Gew.-%, der Anteil des acyclischen Monoolefins der Formel VII beträgt 5 bis 80 Gew.-%, besonders bevorzugt 10 bis 60 Gew.-%, bezogen auf die Gesamtmasse des Cycloolefincopolymers. In den beschriebenen Terpolymeren liegt der Anteil des polycyclischen Monoolefins bei 20 bis 95 Gew.-%, besonders bevorzugt bei 40 bis 90 Gew.-%, bezogen auf die Gesamtmasse des Cycloolefincopolymers.

Die in dem erfindungsgemäßen Schaum enthaltenen Cycloolefincopolymere können vernetzt werden, um eine Fixierung des Polymergerüstes zu erreichen. Die Vernetzung ist während des Verschäumungsprozesses oder im Anschluß an den Verschäumungsprozeß möglich. Die Vernetzung kann z.B. durch Radikalinitiatoren, gegebenenfalls unter Zugabe eines radikalisch polymerisierbaren Monomeren, bevorzugt einer Vinylverbindng, z.B. Styrol, oder eines Vernetzungsmittels, z.B. Divinylbenzol, oder z.B. durch Elektronenstrahlen erreicht werden.

Die Terpolymere, die aus polymerisierten Einheiten bestehen, die sich ableiten von einem polycyclischen Monoolefin, einem acyclischen Monoolefin und einem Polyen, können während des Verschäumungsprozesses oder aber im Anschluß an den Verschäumungsprozeß über die diolefinische Einheit vernetzt werden.

Die in dem erfindungsgemäßen Schaum enthaltenen Cycloolefincopolymere können hergestellt werden bei Temperaturen von -78 bis 200°C und einem Druck von 0,01 bis 200 bar, in Gegenwart eines oder mehrerer Katalysatoren, welche mindestens eine Übergangsmetallverbindung und gegebenenfalls einen Cokatalysator enthalten. Bevorzugt sind Übergangsmetallverbindungen der Gruppe IVb des Periodensystems der Elemente. Als Übergangsmetallverbindungen eignen sich Metallocene, insbesondere stereorigide Metallocene. Beispiele für Katalysatorsysteme, welche für die Herstellung der für die Zwecke der Erfindung geeigneten Cycloolefincopolymer geeignet sind, sind z. B. beschrieben in EP 407 870, EP 485 893, EP 503 422, auf die hier ausdrücklich Bezug genommen wird.

Beispiele für eingesetzte Übergangsmetallverbindungen sind:

rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis-(1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Isopropylen-bis(1-indenyl)-zirkondichlorid,
Diphenylmethylen-(9-fluorenyl)-cyclopentadienylzirkondichlorid,
Isopropylen-(9-fluorenyl)-cyclopentadienyl-zirkondichlorid,
Phenylmethylmethylen-(9-fluorenyl)-cyclopentadienyl-zirkondichlorid,
Isopropylen-(9-fluorenyl)-(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,

Methylphenylmethylen-(9-fluorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
Isopropylen-(9-fluorenyl)(1-(3-tert.-butyl)cyclopentadienyl)-zirkondichlorid,
Isopropylen-(cyclopentadienyl)-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
Isopropylen-(methylcyclopentadienyl)-(1-indenyl)-zirkondichlorid,
4-(η5-cyclopentadienyl)-4,7,7-trimethyl-($\eta^5$-4,5,6,7-tetrahydroindenylzirkondichlorid,
[4-($\eta^5$-cyclopentadienyl)-4,7,7-triphenyl-($\eta^5$-4,5,6,7-tetrahydroindenyl)]zirkondichlorid,
[4-($\eta^5$-cyclopentadienyl)-4,7-dimethyl-7-phenyl-($\eta^5$-4,5,6,7-tetrahydroindenyl)]zirkondichlorid,
[4-($\eta^5$-3'-tert.-butylcyclopentadienyl)-4,7,7-triphenyl-($\eta^5$-4,5,6,7-tetrahydroindenyl)]zirkondichlorid,
[4-($\eta^5$-3'-tert.-butylcyclopentadienyl)-4,7-dimethyl-7-phenyl-($\eta^5$-4,5,6,7-tetrahydroindenyl)]zirkondichlorid,
[4-($\eta^5$-3'-methylcyclopentadienyl)-4,7,7-trimethyl-($\eta^5$-4,5,6,7-tetrahydroindenyl)]zirkondichlorid,
[4-($\eta^5$-3'-methylcyclopentadienyl)-4,7,7-triphenyl-($\eta^5$-4,5,6,7-tetrahydroindenyl)]zirkondichlorid,
[4-($\eta^5$-3'-methylcyclopentadienyl)-4,7-dimethyl-7-phenyl-($\eta^5$-4,5,6,7-tetrahydroindenyl)]zirkondichlorid,
[4-($\eta^5$-3'-isopropylcyclopentadienyl)-4,7,7-trimethyl-($\eta^5$-4,5,6,7-tetrahydroindenyl)]zirkondichlorid,
[4-($\eta^5$-3'-isoproplycyclopentadienyl)-4,7,7-triphenyl-($\eta^5$-4,5,6,7-tetrahydroindenyl)]zirkondichlorid,
[4-($\eta^5$-3'-isopropylcyclopentadienyl)-4,7-dimethyl-7-phenyl-($\eta^5$-4,5,6,7-tetrahydroindenyl)]zirkondichlorid,
[4-($\eta^5$-cyclopentadienyl)($\eta^5$-4,5-tetrahydropentalen)]zirkondichlorid,
[4-($\eta^5$-cyclopentadienyl)-4-methyl-($\eta^5$-4,5-tetrahydropentalen)]zirkondichlorid,
[4-($\eta^5$-cyclopentadienyl)-4-phenyl-($\eta^5$-4,5-tetrahydropentalen)]zirkondichlorid,
[4-($\eta^5$-cyclopentadienyl)-4-phenyl-($\eta^5$-4,5-tetrahydropentalen)]zirkondichlorid,
[4-($\eta^5$-3'-methyl-cyclopentadienyl)($\eta^5$-4,5-tetrahydropentalen)]zirkondichlorid,
[4-($\eta^5$-3'-isopropylcyclopentadienyl)($\eta^5$-4,5-tetrahydropentalen)]zirkondichlorid,
[4-($\eta^5$-3'-benzyl-cyclopentadienyl)($\eta^5$-4,5-tetrahydropentalen)]zirkondichlorid.
[4-($\eta^5$-1-indenyl)($\eta^5$-4,5-tetrahydropentalen)]zirkondichlorid
[4-($\eta^5$-9-fluorenyl)($\eta^5$-4,5-tetrahydropentalen)]zirkondichlorid

Die in dem erfindungsgemäßen Schaum enthaltenen Cycloolefincopolymere weisen eine Glastemperatur von 50 bis 300°C, bevorzugt eine Glastemperatur von 70 bis 250°C auf. Die Glastemperaturen werden mittels DSC (Differential Scanning Calorimetry) bei einer Aufheizrate von 20°C/min bestimmt.

Die für die Zwecke der Erfindung besonders geeigneten Cycloolefincopolymere weisen Viskositätszahlen von 50 bis 300 $cm^3/g$, insbesondere von 60 bis 200 $cm^3/g$ auf. Bestimmt werden die Viskositätszahlen in Dekalin bei 135°C gemäß DIN 53 728.

Die für die Herstellung und Eigenschaften des Schaumes wichtigen Größen wie Glastemperatur, Molmasse und rheologische Eigenschaften lassen sich durch die Wahl der Synthesebedingungen und des Katalysators einstellen.

Die Herstellung von polar modifizierten Polymeren, die u.a. Cycloolefine enthalten können, mit Metallocenen und die Möglichkeit, diese Polymere zu verschäumen, sind in EP-A-427 567 erwähnt.

Für Schäume sind Eigenschaften wie die Wärmeformbeständigkeit und die mechanischen Eigenschaften entscheidend. Ein Material mit einer hohen Steifigkeit ermöglicht die Herstellung von Formteilen geringer Dicke und führt somit zu einer Materialeinsparung.

Anwendungen im Konstruktionsbereich erfordern bei vorgebenen Außenumrissen bzw. bei begrenzter Nutzungsfläche die Verwendung stabiler Bauteile. Der erfindungsgemäße Schaum bietet aufgrund der hohen Steifigkeit bei geringer Dichte die Möglichkeit, sehr dünne Bauteile einzusetzen, was zu Gewichtsersparnis und einer Vergrößerung der Nutzfläche führt. Die Steifigkeit des Bauteils wird bestimmt durch den E-Modul des Materials. Ein hoher E-Modul ist erforderlich, um irreversible Verformungen unter Beanspruchung zu vermeiden. Es wurde gefunden, daß ein Cycloolefincopolymer mit der spezifischen Mikrostruktur besonders geeignet ist für die Herstellung des erfindungsgemäßen Schaumes.

Ein Cycloolefincopolymer eines Typs A, das nach dem in EP-A 485 693 beschriebenen Verfahren hergestellt wird, weist eine spezielle Mikrostruktur auf. Es ist als Ausgangsmaterial für den erfindungsgemäßen Schaum, der neben einer hohen Wärmeformbeständigkeit eine erhöhte Steifigkeit hat, besonders geeignet. Das in dem erfindungsgemäßen Schaum enthaltene Cycloolefincopolymer kann ein Cycloolefincopolymer des Typs A sein, das die genannte spezielle Mikrostruktur aufweist.

Die spezielle Mikrostruktur ist charakterisiert durch eine relativ hohe Stereotaktizität bezüglich der Cycloolefine. Die dadurch hervorgerufene, bevorzugte Konformation der Kette hindert das aneinander Vorbeigleiten von Ketten bei kleinen Dehnungen. Dies wiederum bewirkt eine höhere Steifigkeit (einen höheren E-Modul) als Materialeigenschaft.

Unter der Steifigkeit wird im folgenden verstanden, daß das Cyclolefincopolymer vom Typ A einen intrinsischen E-Modul besitzt, der eine Abhängigkeit von der Glastemperatur des Cycloolefincopolymers (Typ A) gemäß:

$$E_i = (0{,}0025\ [GPa/{}^\circ C] \times T_g[{}^\circ C] + B[GPa]$$

mit B = 2,93 bis 3,19 aufweist.

Der $E_i$-Wert dient als möglicher Nachweis der charakteristischen Mikrostruktur des Cycloolefincopolymers.

Ein weiterer Nachweis dieser Mikrostruktur ist das $^{13}$C-NMR-Spektrum. Die spezielle Mikrostruktur verursacht einige charakteristische Peaks im $^{13}$CNMR-Spektrum. Das $^{13}$C-Spektrum des Cycloolefincopolymers vom Typ A mit der beschriebenen erfindungsgemäßen Steifigkeit weist neben anderen Merkmalen einen charakteristischen Peak bei 40,8 ppm auf.

Die Wahl des Katalysators und der Reaktionsbedingungen ist kritisch für die Erzielung der charakteristischen Mikrostruktur. Beispiele für geeignete Katalysatorsysteme zur Herstellung eines Cycloolefincopolymers des Typs A sind Methylaluminoxan/Diphenylmethylen-(cyclopentadienyl)-(9-fluorenyl)zirkondichlorid oder Methylaluminoxan/Isopropylen-(cyclopentadienyl)-(9-fluorenyl)zirkondichlorid. Jedoch sind auch andere Katalysatorsysteme geeignet, solange die charakteristische Mikrostruktur erhalten wird.

Der Nachweis der Mikrostruktur über die mechanischen Eigenschaften des Polymeren erfolgt im Zugversuch. Es ist dabei wichtig, daß die Probe nicht mehr als 2 % Zuschlagstoffe oder andere Polymere enthält, ausreichend dick und völlig isotrop ist, d.h. keine Vorzugsorientierung der COC-Ketten aufweist. Wenn zuviele Fremdstoffe vorhanden sind, werden nicht die intrinsischen Zug-E-Modul-Werte des Cycloolefincopolymeren gemessen, sondern die Eigenschaften der Mischung. Der intrinsische E-Modul-Wert, $E_i$, wird bei sehr geringen Dehnungen bestimmt (unter 0,1 %, vorzugsweise von 0,03 bis 0,05 %). Die Bestimmung des E-Moduls sollte an Proben mit einer Mindestdicke von 1 mm erfolgen. Da eine Orientierung der Proben die Zug-E-Modut-Werte erhöhen könnte, müssen diese isotrop vorliegen. Es können aus dem COC nicht-orientierte Spritzgußformlinge hergestellt werden, die als $E_i$-Meßproben dienen.

Der intrinsische E-Modul, $E_i$, ist ein E-Modul-Wert, der nach DIN 53 547 bei einer Dehnung < 0,1 % bestimmt wird.

Der intrinsische Zug-E-Modul-Wert eines Cycloolefincopolymeren wird durch die Mikrostruktur des Kettenaufbaus bestimmt, in ähnlicher Weise wie die Taktizität anderer Polymerer deren mechanische Eigenschaften beeinflußt. Bei gleicher $T_g$, was etwa gleiche Molanteile der Monomere bedeutet, weisen die für die in dem erfindungsgemäßen Schaum enthaltenen COC-Polymeren einen höheren intrinsischen Zug-E-Modul auf.

Die spezielle Mikrostruktur verursacht einige charakteristische Peaks im $^{13}$C-NMR-Spektrum.

Für Anwendungen bei kurzfristig oder längerfristig hohen Biegebeanspruchungen sind Materialien mit vergleichsweise guter Biegsamkeit erforderlich. Ein Cycloolefincopolymer eines Typs B, das nach dem EP-A 407 870 beschriebenen Verfahren hergestellt wird, weist aufgrund einer speziellen Mikrostruktur eine verbesserte Biegsamkeit auf. Es wurde gefunden, daß ein Cycloolefincopolymer des Typs B besonders als Ausgangsmaterial für Schäume geeignet ist, die neben einer höheren Wärmebeständigkeit eine erhöhte Biegsamkeit aufweisen. Das in dem erfindungsgemäßen Schaum enthaltene Cycloolefincopolymer kann ein Cycloolefincopolymer des Typs B sein, das die genannte spezielle Mikrostruktur aufweist.

Diese Mikrostruktur ist nach Kernresonanzuntersuchung taktisch bezüglich der Mikrostruktur der Blöcke in der Polymerkette. Die Art der Taktizität ist nicht bekannt. Die Mikrostruktur ist charakterisiert durch eine relativ hohe Isotaktizität bezüglich der Cycloolefine. Dies führt zu einer höheren Verschlaufungsdichte und erlaubt eine mechanische Relaxation, was sich makroskopisch in einer Herabsetzung der Sprödigkeit (= höhere Duktilität) bemerkbar macht. Mechanische Energie kann sich über größere Volumina verteilen; das Material reißt nicht so schnell.

Das Cycloolefincopolymer des Typs B soll eine Nebenerweichung unterhalb der Glastemperatur (Tg) aufweisen, so daß das mechanische tan $\delta$ des Cycloolefincopolymers bei 30°C unterhalb der Glastemperatur mindestens 0,014 ist. Dieser tan $\delta$-Wert dient als möglicher Nachweis der charakteristischen Mikrostruktur des Cycloolefincopolymers.

Ein weiterer Nachweis dieser Mikrostruktur ist das $^{13}$C-NMR-Spektrum. Das $^{13}$C-NMR-Spektrum des Cycloolefincopolymeren des Typs B weist neben anderen Unterschieden einen charakteristischen Peak bei 42,2 ppm auf.

Die Wahl des Katalysators und der Reaktionsbedingungen ist kritisch für die Erzielung der erfindungsgemäßen Mikrostruktur. Beispiele für geeignete Katalysatorsysteme sind Methylaluminoxan/Isopropylen-(cyclopentadienyl) -(1-indenyl)zirkondichlorid oder Methylaluminoxan/Isopropylen-bis-(1-indenyl)zirkondichlorid. Jedoch sind auch andere Katalysatorsysteme geeignet, solange die charakteristische Mikrostruktur erhalten wird.

Der Nachweis der charakteristischen Mikrostruktur kann entweder über den Temperaturverlauf des mechanischen tan $\delta$ oder $^{13}$C-NMR-Spektrum erfolgen. Der Temperaturverlauf des mechanischen tan $\delta$ (auch mechanischer Verlustfaktor genannt) gibt Auskunft über mechanische Relaxationsprozesse, also Haupterweichungen (Glasübergänge) und Nebenerweichungen. Das mechanische tan δ kann mit einer Reihe von Schwingungsmethoden bestimmt werden, z.B. Torsionspendel- oder Wechsellastuntersuchungen (vgl. Ch. Fritzsche, "Torsionsschwingungsmessungen an Kunststoffen" in Kunststoffe-Plastics, Band 21, Heft Nr. 2, (1974) Seiten 17-24). Die Messung des dielektrischen Verlustfaktors ist bei Polyolefinen für die Erfassung mechanischer Relaxationen weniger aufschlußreich, da sie zu wenig polar sind. Die Schwingungsuntersuchung muß an nicht-orientierten Proben durchgeführt werden. Es können aus dem Polymeren nicht orientierte Spritzgußstäbe hergestellt werden, die als Meßproben dienen. Falls eine Probe Zuschlagstoffe in Mengen > 2 Gew.-% enthält, sollten anstelle des mechanischen tan δ die $^{13}C$-NMR-Spektren gemessen werden.

Charakteristisch für die COC mit der erfindungswesentlichen speziellen Mikrostruktur ist, daß das mechanische tan δ Werte > 0,014, bevorzugt > 0,016 bei einer Temperatur 30°C unterhalb der Glastemperatur aufweist. Werte von > 0,1 sind nicht mehr realistisch.

Ein Cycloolefincopolymer des Typs C, das nach dem in EP-A 503 422 beschriebenen Verfahren hergestellt wird, weist eine Teilkristallinität auf. Diese teilkristallinen Cycloolefincopolymere sind ebenfalls für die Herstellung von Schäumen geeignet.

Anhand von $^{13}C$-NMR-Spektren wird gezeigt, daß sich die teilkristallinen Cycloolefincopolymere in ihrer Mikrostruktur deutlich von den vorher beschriebenen, mit anderen Metallocen-Katalysatoren hergestellten Cycloolefincopolymeren unterscheiden. Dieser Unterschied könnte darauf beruhen, daß die hier benutzten Metallocen-Katalysatoren aufgrund ihrer speziellen Symmetrie alternierend polymerisieren. Es ist anzunehmen, daß die so hergestellten Cycloolefincopolymere taktische, alternierende Cycloolefin-α-Olefin-Sequenzen enthalten.

Ein Nachweis für Teilkristallinität kann durch DSC (Diffential Scanning Calorimetry) erfolgen. Aufgrund der Höhe der Schmelztemperatur konnte darauf geschlossen werden, daß die Teilkristallinität nicht auf Ethylen-Sequenzen, sondern vermutlich auf die alternierende Struktur des Cycloolefincopolymers zurückzuführen ist. Die Schmetztemperatur des teilkristallinen Cycloolefincopolymers des Typs C liegt oberhalb 200°C.

Die Wahl des Katalysators und der Polymerisationsbedingungen ist kritisch für die Herstellung der teilkristallinen Cycloolefincopolymere des Typs C. Beispiele für geeignete Katalysatorsysteme sind Methylaluminoxan/ Isopropylen-(9-fluorenyl)-(1-(3-methyl)cyclopentadienyl)zirkondichlorid, Methylaluminoxan/Isopropylen-(9-fluorenyl) -(1-(3-isopropyl)cyclopentadienyl)zirkondichlorid. Jedoch sind auch andere Katalysatorsysteme geeignet, solange die charakteristische Mikrostruktur erhalten wird.

Der Vorteil des Cycloolefincopolymers vom Typ C liegt darin, daß die oben erwähnte Mikrostruktur zu einem teilkristallinen Material führt. Dieses Material ist hervorragend geeignet für die Herstellung eines erfindungsgemäßen Schaumes. Die Teilkristallinität des Cycloolefincopolymers ermöglicht eine zusätzliche Fixierung des Schaumgerüstes und somit eine Verbesserung der thermischen und chemischen Eigenschaften, z.B. der chemischen Beständigkeit und der Barriereeigenschaften.

Der erfindungsgemäße Schaum kann neben mindestens einem Cycloolefincopolymeren ein oder mehrere weitere Polymere enthalten. Geeignet sind Polymere, die aufgrund ihrer Struktur und ihrer spezifischen Eigenschaften mit dem enthaltenen Cycloolefincopolymeren verträglich oder aber nicht verträglich sind. Beispiele für solche Polymere sind Polyethylen, Polypropylen, Ethylenvinylacetatcopolymere, Polymethylmethacrylat, Polyurethan, Polytetrafluorethylen. Ein oder mehrere z.B. dieser Polymere können in dem verschäumbaren Material in einem Anteil von 0 bis 95 Gew.-%, bevorzugt von 0 bis 50 Gew.-%, besonders bevorzugt von 0 bis 10 Gew.-% enthalten sein. Vorteil der Mischungen ist, daß der Zusatz eines weiteren Polymers die Zellenbildung des Schaums und die Eigenschaften der Zellwände und somit die Eigenschaften des erfindungsgemäßen Schaumes beeinflußt.

Dem Polymer wird zum Verschäumen ein Treibmittel zugeführt. Das Treibmittel ist in Anteilen von 0,01 bis 20 Gew.-%, bevorzugt von 0,1 bis 10 Gew.-% in dem verschäumbaren Material enthalten. Unter einem Treibmittel wird eine Substanz verstanden, die durch Zersetzung, Umsetzung oder Verdampfung Gase freisetzt, die zu einem Aufschäumen des Materials führen, oder aber ein Gas, das durch Expansion ein Aufschäumen des Materials bewirkt. Es kann sich bei dem Treibmittel um einen Feststoff, eine Flüssigkeit, ein Gas oder auch eine Kombination dieser Substanzen handeln.

Das verschäumbare Material kann außerdem ein Nukleierungsmittel in Anteilen von 0,01 bis 20 Gew.-%, bevorzugt von 0,1 bis 10 Gew.-% enthalten. Das Nukleierungsmittel kann mit dem Treibmittel identisch sein.

Weitere Zusätze oder Additive können in Anteilen von 0,01 bis 80 Gew.-%, bevorzugt 0,05 bis 50 Gew.-%, besonders bevorzugt 0,05 bis 20 Gew.-% in dem verschäumbaren Material enthalten sein. Diese Additive können sein: Wärmestabilisatoren, Witterungsstabilisatoren, Licht-, UV-Stabilisatoren, Schäumungshilfsmittel, Antitrübungsmittel, Antistatika, Gleitmittel, Antiklebemittel, Schmiermittel, natürlich oder synthetische Öle, Wachse, oberflächenaktive Substanzen, Farben, Pigmente, organische oder anorganische Füllstoffe, solange diese Additive die Anforderungen der vorliegenden Erfindung nicht beeinträchtigen.

Im Sinne der Erfindung ist auch ein Schaum vorgesehen, wobei ein bestimmter Teil des Cycloolefincopolymeren durch ein Fremd-Polymer mit dem gleichen Gewichtsanteil ersetzt wird und der Gewichtsanteil 0 bis 90 Gew.-%, bevorzugt 0 bis 50 Gew.-% beträgt und wobei als Fremd-Polymer mindestens ein Polymer wie Polypropylen, Polypropylencopolymer oder Polyethylen verwendet werden.

Die Herstellung des erfindungsgemäßen Schaumes erfolgt ausgehend von einem Cycloolefincopolymer mit Mikrostruktur des Typs A, B oder C , oder auch Kombinationen dieser Cycloolefincopolymere, und gegebenenfalls einen oder mehrere Fremdpolymere. Das verschäumbare Material, aus dem der erfindungsgemäße Schaum hergestellt wird, mit mindestens einem Treibmittel verschäumt.

Treibmittel, die durch Zersetzung oder Umsetzung Gase freisetzen, die zu einem Aufschäumen des verschäumbaren Materials führen, werden als chemische Treibmittel bezeichnet, im Gegensatz zu den physikalischen Treibmitteln, bei denen das Aufschäumen durch Verdampfen einer Flüssigkeit oder durch Expansion eines Gases erreicht wird.

Die chemischen Treibmittel umfassen organische und anorganische Treibmittel. Beispiele für anorganische Treibmittel sind Carbonate wie z.B. Natriumhydrogencarbonat, Ammoniumcarbonat, Ammoniumhydrogencarbonat, Nitrite, Azide, Natriumborhydrid. Beispiele für organische Treibmittel sind Azoverbindungen, wie z.B. Azodicarbonamid, Bariumazodicarboxylat, Hydrazin-Derivate, wie z.B. 4,4-Oxybis(benzolsulfohydrazid), Diphenylsulfon-3,3'disulfohydrazid, Trihydrazinotriazin, Semicarbazide, wie z.B. p-Toluylensulfonylsemicarbäzid, Tetrazole, wie z.B. 5-Phenyltetrazol, Benzoxazine, wie z.B. Isatosäureanhydrid.

Die Zersetzungs- bzw. Umsetzungstemperatur, die Menge entstehenden Gases, die Zersetzungs- bzw. Umsetzungsgeschwindigkeit und die Art der Zersetzungs- bzw. Umsetzungsrückstände sind wichtige Faktoren bei der Auswahl des geeigneten chemischen Treibmittels.

Es können dem verschäumbaren Material außerdem Hilfsmittel, z.B. Kicker, Nukleierungsmittel zugesetzt werden, die die Zersetzungstemperatur des Treibmittels heruntersetzen, die entstehende Gasmenge und die Geschwindigkeit der Zersetzung bzw. Umsetzung erhöhen oder die Initiierung von Gasblasen fördern und so die Schaumbildung oder Schaumstruktur beeinflussen. Diese umfassen u.a. Harnstoff, Polyole, Amine, metallhaltige Verbindungen, z.B. Zinkoxid, Säuren, wie z.B. Oxalsäure, Succinsäure, Zitronensäure.

Physikalische Treibmittel umfassen Flüssigkeiten und Gase. Beispiele für physikalische Treibmittel sind gesättigte, ungesättigte oder cyclische Kohlenwasserstoffe, halogenierte Kohlenwasserstoffe, Alkohole, Wasser, Stickstoff und Kohlendioxid und Mischungen dieser Treibmittel. Bevorzugt aufgrund ihrer niedrigen Siedepunkte sind Treibmittel wie Methan, Ethan, Ethen, Propan, Propen, n-Butan, 1-Buten, 2-Buten, iso-Butan, Isobuten, n-Pentan, Isopentan, 2,2-Dimethylpropen, Cyclopentan. Andere Treibmittel wie Wasser, Stickstoff, Kohlendioxid sind zwar in ihrer Handhabung, z.B. in bezug auf die Dosierung, schwieriger, sie bieten jedoch ökologische Vorteile und sind z.B. auch im Hinblick auf die nicht vorhandene Brennbarkeit vorteilhaft.

In Kombination mit physikalischen Treibmitteln können ebenfalls Hilfsmittel, z.B. Nukleierungsmittel eingesetzt werden. Bevorzugte Nukleierungsmittel sind Wasser, Stickstoff, Talkum, Kreide, Natriumcarbonat, Natriumhydrogencarbonat und/oder Zitronensäure.

Die Herstellung des erfindungsgemäßen Schaumes kann durch Verwendung eines oder mehrerer Treibmittel erfolgen oder durch Verwendung einer Kombination eines oder mehrerer Treibmittel und eines oder mehrerer Hilfsmittel. Dabei kann das Hilfsmittel, das z.B. als Nukleierungsmittel wirkt, mit einem Treibmittel identisch sein. Im folgenden wird daher von einer Treibmittelkomposition gesprochen. Dieser Begriff umfaßt alle Systeme, die eines oder mehrere Treibmittel oder eine Kombination eines oder mehrerer Treibmittel und eines oder mehrerer Hilfsmittel enthalten.

Die Treibmittelkomposition kann auf bekannte Weise mit dem zu verschäumenden Polymer vermischt werden. Feste Treibmittelkompositionen können dem Cycloolefincopolymer dabei in Form eines unmodifizierten Pulvers, eines oberflächlich behandelten Pulvers, als Treibmittelpaste, d.h. meistens in einem Weichmacher und gegebenenfalls einem Dispergierhilfsmittel als flüssigem Träger, in Form einer Treibmitteldispersion, als Pulverkonzentrat in dem später zu verschäumenden Polymer als Träger, als Treibmittelkonzentrat (Masterbatch) in Granulatform in einem polymeren Träger oder aber als Treibmittelformulierung in Stäbchen-, Schuppen- oder Granulatform mit einem niedrigschmelzenden Wachs als Bindemittel zugemischt werden. Flüssige Treibmittelkompositionen können in flüssiger Form, bei Atmosphärendruck gasförmige Treibmittelkompositionen können gasförmig oder aber in verflüssigter Form zugemischt werden.

Ein homogenes Einarbeiten kann oberhalb der Erweichungstemperatur des Polymers z.B. in einem Kneter oder Extruder erfolgen. Bei Verwendung eines chemischen Treibmittels kann die Temperatur während dieses Einarbeitungsschrittes unterhalb der Zersetzungs- bzw. Umsetzungstemperatur des Treibmittels liegen, so daß die Zersetzung bzw. Umsetzung erst anschließend bei höherer Temperatur erfolgt, oder aber sie kann bereits oberhalb der Zersetzungs- bzw. Umsetzungstemperatur des Treibmittels liegen. Das bei Verwendung chemischer und physikalischer Treibmittelkompositionen entstehende und/ oder expandierende Gas wird zunächst in der Polymerschmelze gehalten, die Expansion und Aufschäumung erfolgt gegen geringeren Druck, bevorzugt gegen Atmosphärendruck.

Es wurde gefunden, daß Cycloolefincopolymere ausgezeichnet geeignet sind für die Herstellung der erfindungsgemäßen Schäume. Es wurde gefunden, daß die Treibmittel sich sehr gut in die Schmelze einarbeiten lassen. Dies ist möglicherweise auf die gute Fließfähigkeit des Materials zurückzuführen, die über die Monomerverhältnisse,

die Molmasse des Polymers und die Wahl des Metallocen-Katalysators eingestellt werden kann. Die Verschäumung zu den erfindungsgemäßen Schäumen kann durch Extrudieren, Spritzgießen, Blasformen, Formschäumen etc. und unter Verwendung der oben beschriebenen Treibmittelkompositionen erfolgen. Es können sich weitere Verarbeitungsschritte wie Kalandrieren, Tiefziehen, Verstrecken, Thermoformen etc. anschließen. Die erfindungsgemäßen Schäume sind demnach durch etablierte Verfahren sehr gut zugänglich.

Es wurde nun gefunden, daß die in dem verschäumbaren Material enthaltenen Cycloolefinopolymere ein sehr schmales Temperaturfenster zwischen erstarrter bzw. zäher Schmelze und fließfähiger Schmelze zeigen. Dadurch läßt sich das verschäumbare Material im geschmolzenen Zustand mit hohen Durchsätzen fördern, erstarrt aber sehr schnell nach dem Austritt aus der Düse des Extruders. Die hohe Schmelzestabilität führt dazu, daß das verdampfende Treibmittel nicht entweichen kann, sondern mit hoher Effektivität zum Aufschäumen des Materials genutzt wird.

Ebenfalls können aus dem verschäumbaren Material vorgeschäumte Perlen oder Partikel hergestellt werden, die nachträglich - z.B. durch Zusammenpressen und Verschweißen, z.B. mit heißer Luft oder Wasserdampf, in die gewünschte Form in beliebiger Gestalt und Größe gebracht werden können.

Die Verarbeitung zu Schäumen mit den oben beschriebenen Eigenschaften macht eine Anpassung von Größen wie Temperatur, Molmasse und rheologischen Eigenschaften erforderlich.

In Abhängigkeit von den Verarbeitungsbedingungen und den verwendeten Treibmittelkompositionen können erfindungsgemäße Schäume unterschiedlicher Härte und Dichte hergestellt werden. Die erfindungsgemäßen Schäume können eine Dichte von 5 bis 900 kg/$m^3$, bevorzugt 10 bis 900 kg/$m^3$ aufweisen und eine Druckfestigkeit von 0,01 bis 100 MPa, bevorzugt von 0,1 bis 100 MPa. Die Dichteverteilung über das jeweilige Formteil kann einheitlich oder uneinheitlich sein. Die erfindungsgemäßen Schäume können weich, halbhart bis hart, bevorzugt halbhart bis hart sein.

Der erfindungsgemäße Schaum enthält Zellen, d.h. Hohlräume. Es wird unterschieden zwischen geschlossenen und offenen Zellen. Bei geschlossenen Zellen bestehen die den Hohlraum umschließenden Zellwände aus nicht perforiertem oder in sonstiger Weise für ein Medium undurchlässigem Kunststoff. Bei offenen Zellen weisen mindestens zwei der den Hohlraum umschließenden Zellwände Öffnungen auf, so daß zwischen benachbarten Zellen ein Stoffaustausch möglich ist. Die erfindungsgemäßen Schäume können unterschiedliche Anteile an offenen und geschlossenen Zellen enthalten. Die Herstellung sogenannter offenporiger und geschlossenporiger Schäume ist daher möglich. Die erfindungsgemäßen Schäume können zwischen 0 und 100 Vol.% geschlossene Zellen aufweisen.

Es werden bevorzugt geschlossenporige Schäume hergestellt. Der erfindungsgemäße Schaum enthält daher bevorzugt einen Anteil von geschlossenen Zellen von mehr als 30 Vol.%, besonders bevorzugt mehr als 50 Vol.%. Diese Schäume zeigen die beschriebene hohe Wärmeformbeständigkeit und herausragende mechanische Eigenschaften. Außerdem wurde gefunden, daß sich der erfindungsgemäße Schaum durch gute Barriereeigenschaften, wie eine geringe Wasseraufnahme und geringe Wärmeleitfähigkeit auszeichnet. Aufgrund der Struktur des polymeren Ausgangsmaterials weist der erfindungsgemäße Schaum ein hervorragendes Wärmealterungsverhalten auf.

Die besonders bei den erfindungsgemäßen geschlosseriporigen Schäumen unterschiedlicher Dichte unter geeigneten Verarbeitungsbedingungen auftretende feine Schaumstruktur erhöht die Lichtbrechung. Das Material erscheint weiß und ist wesentlich lichtbeständiger. Von dem erfindungsgemäßen Schaum umgebene lichtempfindliche Substanzen sind vor Licht geschützt. Aufgrund der glatten, glänzenden Oberfläche, in Verbindung mit den thermischen und mechanischen Eigenschaften sind die erfindungsgemäßen Schäume besonders gut geeignet für die verschiedenen Anwendungen im Bauund Automobilsektor, als Konstruktionsteile und dekorative Teile und im Bereich Verpakkungen und Isolierungen.

Die erfindungsgemäßen Schäume können angewendet werden in Form von extrudierten Formteilen, wie Platten, Folien, Schläuchen, Rohren, Stangen, Bändern, Profilen, in Form von Blasformteilen, wie Platten, Folien, Schläuchen, Rohren, Behältern, in Form von Spritzgußteilen bzw. von formgeschäumten Teilen beliebiger Form und Größe, in Form von tiefgezogenen Folien, Behältern und Bechern.

Außerdem können die erfindungsgemäßen Schäume angewendet werden in Form von Teilen, die hergestellt werden, z.B. durch Verschweißen von vorgeschäumten Perlen oder Partikeln. Auf diese Weise können Formteile beliebiger Gestalt und Größe hergestellt werden.

Der erfindungsgemäße Schaum ist für Verbundmaterialien mit anderen Polymeren wie Polyethylen oder Polypropylen ausgezeichnet geeignet. Die Verbundmaterialien bestehen z.B. aus verschiedenen Schichten von zwei oder: mehr Polymeren. Ein Beispiel für ein solches Verbundmaterial ist ein Formteil, bestehend aus dem erfindungsgemäßen Schaum und einer Deckschicht aus einem anderen Material, wie Polyethylen, Polypropylen. Die erfindungsgemäßen Verbundmaterialien können z.B. durch Coextrusion, durch Mehrkomponentenspritzguß oder auch durch nachträgliche Beschichtung eines Formteiles hergestellt werden.

Die Anwendungen der erfindungsgemäßen Schäume können z.B. im Bereich Automobil, Bau und Konstruktion liegen, z.B. für Konstruktionsbauteile, dekorative Bauteile, auch im Bereich Transport und Verpackungen, z.B. in Form von Tanks, Behältern, Leitungen, Verpackungsmaterial, Verpackungen und Behältnissen für Lebensmittel und Getränke, im Bereich Isolierung, z.B. als Material für Wärme-, Schall-, Stoß-, elektrische Isolierungen z.B. in Form von Bauteilen, Verpackungsmaterial, Gehäusen für Geräte oder Behälter, Ummantelungen für Kabel und Leitungen. Beispiele für solche Anwendungen im Automobilbereich sind Armaturenbrett, Türinnenräume, Dachhimmel, Kopfstützen, Blenden, Klappen, Abdeckungen, sowie Wände, Verschalungen, Abdeckungen bei Traileraufbauten, Wohnmoblien etc.

Eine weitere Anwendung der erfindungsgemäßen Schäume im Bereich Konstruktion ist die Verwendung als Wände für Dekorationszwecke, Trennwände, Abdeckungen etc.

Die erfindungsgemäßen Schäume können als Isolationsmaterialien eingesetzt werden, z. B. für die Wärmeisolation von Kesseln, Behältern, Zu- und Ableitungen etc. bei der Heiß- und Warmwasserzubereitung ebenso wie für die Isolation von Kühlgeräten, Kühlschränken, Transportbehättern, Kühlfahrzeugen. Dabei können die erfindungsgemäßen Schäume in Form von Platten, Folien, Formkörpern, Halbschalen verwendet werden. Außerdem besteht die Möglichkeit einer Kombination von Behälter, Leitung o.ä. mit der Isolationsschicht, indem z.B. der Behälter bei der Herstellung durch Blasformen gleichzeitig aufgeschäumt wird und die Behälter-, Leitungswand so gleichzeitig Isolationsschicht ist. Vorteil einer solchen Kombination ist erstens die Einsparung eines Arbeitsschrittes zur getrennten Verschäumung des Isolationsmaterials und eines weiteren Arbeitsschrittes zum Zusammenfügen von Behälter und Isolationsschicht. Zweitens sind Behälter und Isolationsmaterial aus dem gleichen Polymer, so daß eine aufwendige Trennung nach Verwendung entfällt und eine Verwertung problemlos ist. Für eine solche Anwendung hat sich der erfindungsgemäße Schaum als besonders geeignet erwiesen, da er eine hohe Beständigkeit gegen warmes und heißes Wasser aufweist und aufgrund seiner chemischen Struktur kein Wasser aufnimmt. Außerdem ist der erfindungsgemäße Schaum gesundheitlich unbedenklich und somit auch für Anwendung im Lebensmittel- und Trinkwasserbereich geeignet.

Der in der vorliegenden Erfindung beschriebene Schaum zeichnet sich dadurch aus, daß es sich um ein leicht zugängliches und mit bekannten Verfahren gut herzustellendes Material handelt, dessen Eigenschaften über einen weiten Bereich der Anwendung angepaßt werden können und das somit ökonomisch vorteilhaft ist. Gleichzeitig ist dieses Material von ökotogischem Vorteil, da es sich bei dem Ausgangsmaterial um ein Polyolefin, d.h. einen reinen Kohlenwasserstoff, handelt und der erfindungsgemäße Schaum somit ohne Bedenken verwertet werden kann. Ein Vorteil des erfindungsgemäßen Schaumes liegt in seiner sehr hohen und einstellbaren Wärmeformbeständigkeit, die dieses Material gegenüber anderen polymeren Schäumen auszeichnet. Vorteilhaft sind außerdem die hervorragenden, ebenfalls variablen mechanischen Eigenschaften und die hohe Chemikalien- und Hydrolysebeständigkeit, besonders im Vergleich zu Polyurethan-, Polycarbonatschäumen.

Für den Einsatz in speziellen Anwendungsgebieten ist besonders vorteilhaft, daß der erfindungsgemäße Schaum außerdem eine gute Barrierewirkung, wie eine geringe Aufnahme von Wasser und eine gute Wasserdampfsperrwirkung, und ein hervorragendes Wärmealterungsverhalten aufweist. Für die Anwendung als Wärmeisolationsmaterial ist die niedrige Wärmeleitfähigkeit des erfindungsgemäßen Schaumes besonders vorteilhaft.

Die vorliegende Erfindung wird anhand einer Zeichnung und der nächstfolgenden Beispiele näher erläutert.

Zeichnung Die Zeichnung enthält Fig. 1 bis Fig. 9.

Fig. 1 zeigt ein $^{13}$C-NMR-Spektrum eines Cycloolefincopolymeren des Typs A mit der für diesen Typ charakteristischen Mikrostruktur. Fig. 2 zeigt ein $^{13}$C-NMR-Spektrum eines Cycloolefincopolymeren des Typ B mit der für diesen Typ charakteristischen Mikrostruktur.

Die Spektren weisen einige gemeinsame Peaks und Unterschiede auf, wobei die Unterschiede wahrscheinlich auf einen unterschiedlichen sterischen Aufbau der Polymeren ("Taktizität") zurückgeführt werden können. Die spezielle Mikrostruktur des Cycloolefincopolymeren des Typs A ergibt einige charakteristische Peaks, die aus der Tabelle 1 hervorgehen:

Tabelle 1:

| Gemeinsame Peaks | Charakteristische Peaks des Typs A |
|---|---|
| (ppm) | (ppm) |
| 47,5 | 49,8 |
| 46.8 | |
| 41,7 | 40,8 |
| 32,8 | 33,3 |
| 30,1 | 29,3 |

Da die Lage der einzelnen Peaks etwas in Abhängigkeit der Aufnahmebedingungen der Spektren variieren kann, können die in allen Spektren gemeinsamen Peaks als Referenzpunkte dienen. Die Höhen der jeweiligen Peaks variieren je nach Monomerzusammensetzung, jedoch sind die Lagen charakteristisch. Eindeutig für die erfindungsgemäße Mikrostruktur sind die Peaks bei 29,3, 33,3, 40,8 und 49,8 ppm. (Die genannten Peaks sind charakteristisch für

die spezielle Mikrostruktur, jedoch enthalten die Spektren in der Regel auch andere Peaks). Zusatzstoffe oder Verunreinigungen können zu zusätzlichen Peaks in einem Spektrum führen. Daher können Spektren der erfindungsgemäß einzusetzenden Polymeren auch zusätzliche Peaks enthalten.

Die spezielle Mikrostruktur des Cycloolefincopolymeren des Typs B verursacht einige charakteristische Peaks im $^{13}$C-NMR-Spektrum. Die Fig. 2 zeigt ein typisches Spektrum von Cycloolefincopolymeren aus Norbornen und Ethylen mit der speziellen Mikrostruktur; Fig. 1 zeigt im Vergleich ein Spektrum eines Cycloolefincopolymeren ohne die charakteristische Mikrostruktur. Die Spektren weisen einige gemeinsame Peaks und Unterschiede auf, wobei die Unterschiede wahrscheinlich auf einen unterschiedlichen sterischen Aufbau der Polymeren ("Taktizität") zurückgeführt werden können. Die spezielle Mikrostruktur ergibt einige charakteristische Peaks die aus der Tabelle 2 hervorgehen. Die in Fig. 1 und Fig. 2 gemeinsamen Peaks sind ebenfalls in Tabelle 2 angegeben.

Tabelle 2

| Gemeinsame Peaks | Charakteristische Peaks des Typs B |
|---|---|
| (ppm) | (ppm) |
| 47,5 | 49,8 |
| 46,8 | 47,7 |
| 41,7 | 42,2 |
| | 41,3 |
| 32,8 | 33,1 |
| 30.1 | 31,5 |
| | 28,0 |

Da die Lage der einzelnen Peaks etwas in Abhängigkeit der Aufnahmebedingungen der Spektren variieren kann, können die in allen Spektren gemeinsamen Peaks als Referenzpunkte dienen. Die Höhen der jeweiligen Peaks variieren je nach Monomerzusammensetzung, jedoch sind die Lagen charakteristisch. Eindeutig für die charakteristische Mikrostruktur sind die Peaks bei 28,0, 31,5, 33,1, 41,3, 42,2, 47,7 und 48,8 ppm. (Die genannten Peaks sind charakteristisch für die spezielle Mikrostruktur, jedoch enthalten die Spektren in der Regel auch andere Peaks). Zusatzstoffe oder Verunreinigungen können zu zusätzlichen Peaks in einem Spektrum führen. Daher können Spektren der erfindungsgemäß einzusetzenden Polymeren auch zusätzliche Peaks enthalten.

In Fig. 3 und Fig. 4 ist der Temperaturverlauf des mechanischen tan $\delta$ von Polymeren mit und ohne die charakteristische Mikrostruktur der Cycloolefincopolymeren des Typs B dargestellt. Die Polymere mit der charakteristischen Mikrostruktur weisen höhere Werte im Bereich zwischen der Glastemperatur bis unter 0°C auf. Die Proben mit der charakteristischen Mikrostruktur haben daher in diesem Temperaturbereich eine verbesserte Duktilität.

In Fig. 5 und Fig. 6 ist der Zug-E-Modul in Abhängigkeit von der Glastemperatur für Polymere mit und ohne die charakteristische Mikrostruktur des Cycloolefincopolymeren des Typs A dargestellt.

In Fig. 7 bis Fig. 9 ist der Temperaturverlauf des mechanischen tan $\delta$ von Polymeren mit und ohne die charakteristische Mikrostruktur der Cycloolefincopolymeren des Typs B dargestellt. Die Polymere mit der charakteristischen Mikrostruktur weisen höhere Werte im Bereich zwischen der Glastemperatur bis unter 0°C auf. Die Proben mit der charakteristischen Mikrostruktur haben daher in diesem Temperaturbereich eine verbesserte Duktilität.

Beispiele

Beispiel 1:

Herstellung eines Polymers mit der für die Herstellung steifer Schäume erfindungswesentlichen Mikrostruktur

In einem 1,5 dm$^3$-Autoklav, der vorher gründlich mit Ethen gespült wurde, wurden 600 cm$^3$ einer 85 gew. %igen Lösung von Norbornen in Toluol vorgelegt. Durch mehrfaches Aufdrücken von Ethen (6 bar) wurde die Lösung gesättigt. In den so vorbereiteten Reaktor wurden im Gegenstrom 5 cm$^3$ toluolische Methylaluminoxanlösung (10,1 gew.%ige Methylaluminoxanlösung der Molmasse 1300 g/mol nach kryoskopischer Bestimmung) dosiert und 30 Minuten bei 70°C gerührt. Eine Lösung von 0,16 mg Isopropylen-(cyclopentadienyl)-(9-fluorenyl)zirkondichlorid in 5 cm$^3$ toluolischer Methylaluminoxanlösung wurde nach 15 minütiger Voraktivierung zugegeben. (Im Falle einer Wasserstoffregelung kann an dieser Stelle Wasserstoff aufgepreßt werden.)
Unter Rühren (750 Upm) wurde eine Stunde polymerisiert, wobei der Ethendruck durch Nachdosieren bei 6 bar gehalten wurde.
Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10%iger Salzsäure und Aceton gewaschen.

Abschließend wurde mit Wasser neutral gewaschen, der Rückstand in Aceton aufgeschlämmt und erneut filtriert. Das so gereinigte Polymer wurde bei 80°C im Vakuum (0,2 bar) 15 Stunden getrocknet.
Es wurden 23,5 g des Produktes erhalten bei einer Aktivität von 63.523 g/(mmol*h). Das Produkt wies eine Glastemperatur von 155°C, eine Viskositätszahl von 211 $cm^3$/g und eine Molmassenverteilung (GPC) von 2,3 auf.
Ein $^{13}$C-NMR-Spektrum einer Lösung des Polymers in Hexachlorbutadien und Tetrachlorethan-D2 wurde mit einem 400 MHz-NMR-Gerät (Bruker AM 400) aufgenommen. Wie in Fig. 1 gezeigt, weist das Spektrum die charakteristischen Peaks bei 29,3, 33,3, 40,8 und 49,8 ppm auf.

Beispiel 2 bis 5:

Herstellung weiterer Polymere mit der für die Herstellung steifer Schäume erfindungswesentlichen Mikrostruktur

Analog zu Beispiel 1 wurden Polymere mit unterschiedlichen Glastemperaturen hergestellt. In Beispiel 4 und 5 wurde Diphenylmethylen-(cyclopentadienyl)-(9-fluorenyl)zirkondichlorid als Metallocen-Katalysator verwendet. In diesen Beispielen wurde zur Regelung der Molmasse Wasserstoff aufgepreßt. In Tabelle 3 sind die von Beispiel 1 abweichenden Reaktionsbedingungen der Beispiele 2 bis 5 zusammengefaßt.
Die für die Mikrostruktur charakteristischen Peaks im $^{13}$C-NMR-Spektrum bei 29,3, 33,3, 40,8 und 49,8 ppm sind auch hier vorhanden.

Tabelle 3

| Beispiel | Ethendruck | Wasserstoff | Menge Metallocen | Zeit | Ausbeute | Tg | VZ |
|---|---|---|---|---|---|---|---|
| | bar | mmol | mg | min | g | °C | $cm^3$/g |
| 2 | 10 | - | 0,17 | 30 | 30,9 | 134 | 192 |
| 3 | 14 | - | 0,24 | 30 | 60,3 | 122 | 169 |
| 4 | 10 | 1,08 | 1,18 | 60 | 87,7 | 145 | 119 |
| 5 | 3 | 0.22 | 1.2 | 60 | 17 | 185 | 46 |

Beispiel 6:

Zusammenhang zwischen den $E_i$-Werten und der Glastemperatur bei Polymeren mit der für die Herstellung steifer Schäume erfindungswesentlichen Mikrostruktur

Weitere Polymere mit der speziellen Mikrostruktur mit unterschiedlichen Glastemperaturen wurden wie in den Beispielen 1 bis 6 unter Verwendung von Isopropylen-(cyclopentadienyl)-(9-fluorenyl)zirkondichlorid und Diphenylmethylen-(cyclopentadienyl)-(9-fluorenyl)zirkondichlorid hergestellt, wobei die Glastemperatur über die Einbauverhältnisse von Norbornen und Ethen variiert wurde. Die $^{13}$C-NMR-Spektren aller Polymere wiesen die charakteristischen Peaks bei 29,3, 33,3, 40,8 und 49,8 ppm auf.
Diese Polymere wurden aufgeschmolzen und mit einer Spritzgußmaschine zu Schulterstäben entsprechend DIN 53 457 geformt. An diesen Proben wurden die intrinsischen E-Modul-Werte ($E_i$-Werte) bestimmt. Mittels DSC wurden die Glastemperaturen ($T_g$) ebenfalls bestimmt.
Fig. 5 zeigt die Abhängigkeit der $E_i$-Werte von der $T_g$ der einzelnen Polymere. Diese Polymere erfüllen die Beziehung:

$$E_i = (0{,}0025\ [\mathrm{GPa/\ C}) \times T_g\ [\ \mathrm{C}]) + B\ [\mathrm{GPa}]$$

mit B = 2,93 - 3,19.

Beispiel 7 (Vergleichsbeispiel):

Zusammenhang zwischen den $E_i$-Werten und der Glastemperatur bei Polymeren ohne erfindungswesentliche Mikrostruktur

Weitere Polymere ohne die spezielle Mikrostruktur mit unterschiedlichen Glastemperaturen wurden analog zu Beispiel 1 bis 6 unter Verwendung von rac-Dimethylsilyl-bis-(1-indenyl)zirkondichlorid hergestellt, wobei die Glastemperatur über die Einbauverhältnisse von Norbornen und Ethen variiert wurde. In den $^{13}C$-NMR-Spektren dieser Polymere fehlten die charakteristischen Peaks bei 29,3, 33,3, 40,8 und 49,8 ppm.
Fig. 5 zeigt die Abhängigkeit der $E_i$-Werte von der $T_g$ der einzelnen Polymere.
Diese Polymere weisen $E_i$-Werte deutlich unterhalb der Beziehung:

$$E_i = (0{,}0025\ [GPa/\ C) \times T_g\ [\ C]) + B\ [GPa]$$

mit B = 2,93 - 3,19 auf.

Beispiel 8:

Herstellung von Polymeren mit der für die Herstellung biegsamer Schäume erfindungswesentlichen Mikrostruktur

In einem 1,5 $dm^3$-Autoklav, der vorher gründlich mit Ethen gespült wurde, werden 600 $cm^3$ einer 85 gew. %igen Lösung von Norbornen in Toluol vorgelegt. Durch mehrfaches Aufdrücken von Ethen (6 bar) wurde die Lösung gesättigt. In den so vorbereiteten Reaktor wurden im Gegenstrom 5 $cm^3$ toluolische Methylaluminoxanlösung (10,1 gew.%ige Methylaluminoxanlösung der Molmasse 1300 g/mol nach kryoskopischer Bestimmung) dosiert und 30 Minuten bei 70°C gerührt. Eine Lösung von 1,2 mg Isopropylen-(cyclopentadienyl)-(1-indenyl)zirkondichlorid in 5 $cm^3$ toluolischer Methylaluminoxanlösung wurde nach 15 minütiger Voraktivierung zugegeben. (Im Falle einer Wasserstoffregetung kann an dieser Stelle Wasserstoff aufgepreßt werden.)
Unter Rühren (750 Upm) wurde eine Stunde polymerisiert, wobei der Ethendruck durch Nachdosieren bei 6 bar gehalten wurde. Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10%iger Salzsäure und Aceton gewaschen. Abschließend wurde mit Wasser neutral gewaschen, der Rückstand in Aceton aufgeschlämmt und erneut filtriert. Das so gereinigte Polymer wurde bei 80°C im Vakuum (0,2 bar) 15 Stunden getrocknet.
Es wurden 44,8 g des Produktes erhalten bei einer Aktivität von 14.278 g/(mmol*h). Das Produkt wies eine Glastemperatur von 179°C, eine Viskositätszahl von 73 $cm^3$/g und eine Molmassenverteilung (GPC) von 2,0 auf.
Ein $^{13}C$-NMR-Spektrum einer Lösung des Polymers in Hexachlorbutadien und Tetrachlorethan-D2 wurde mit einem 400 MHz-NMR-Gerät (Bruker AM 400) aufgenommen. Wie in Abbildung 2 gezeigt, weist das Spektrum die charakteristischen Peaks bei 28,0, 31,5, 33,1, 41,3, 42,2, 47,7, 48,8 ppm auf.

Beispiel 9 bis 14:

Herstellung weiterer Polymere mit der für die Herstellung biegsamer Schäume erfindungswesentlichen Mikrostruktur

Analog zu Beispiel 8 wurden Polymere mit unterschiedlichen Glastemperaturen hergestellt. In Beispiel 9 wurde Dimethylsilyl-bis-(1-indenyl)zirkondichlorid als Metallocen-Katalysator verwendet. In Beispiel 10-12 wurde Isopropylen-bis-(1-indenyl)zirkondichlorid als Metallocen-Katalysator verwendet. In Beispiel 13 und 14 wurde Isopropylen bis-(cyclopentadienyl) (1-indenyl)zirkondichlorid als Metallocen-Katalysator verwendet.
In Tabelle 4 sind die von Beispiel 8 abweichenden Reaktionsbedingungen der Beispiele 9 bis 13 zusammengefaßt.
Die für die Mikrostruktur charakteristischen Peaks im $^{13}C$-NMR-Spektrum bei 28,0, 31,5, 33,1, 41,3, 42,2, 47,7, 48,8 ppm sind auch hier vorhanden.

Tabelle 4

| Beispiel | Ethendruck | Wasserstoff | Menge Metallocen | Zeit | Ausbeute | Tg | VZ |
|---|---|---|---|---|---|---|---|
| | bar | mmol | mg | min | g | °C | $cm^3$/g |
| 9 | 6 | - | 8 | 120 | 55 | 178 | 89 |

Tabelle 4 (fortgesetzt)

| Beispiel | Ethendruck | Wasserstoff | Menge Metallocen | Zeit | Ausbeute | Tg | VZ |
|---|---|---|---|---|---|---|---|
| | bar | mmol | mg | min | g | °C | $cm^3/g$ |
| 10 | 3 | - | 1,4 | 60 | 14,7 | 232 | 198 |
| 11 | 6 | - | 1,03 | 60 | 17,7 | 194 | 221 |
| 12 | 12 | 0,35 | 0,47 | 60 | 33,5 | 147 | 80 |
| 13 | 12 | - | 1,01 | 60 | 115 | 119 | 63 |
| 14 | 18 | - | 1.14 | 60 | 99.8 | 140 | 78 |

Beispiel 15 (Vergleichsbeispiel):

Herstellung eines Polymers ohne die erfindungswesentliche Mikrostruktur Analog zu Beispiel 8 wurden ein Polymer ohne die erfindungswesentliche Mikrostruktur hergestellt. Es wurde Diphenylmethylen-(cyclopentadienyl) -(9-fluorenyl)zirkondichlorid als Metallocen-Katalysator verwendet.

Die von Beispiel 8 abweichenden Reaktionsbedingungen sind in Tabelle 5 zusammengefaßt.

Tabelle 5

| Beispiel | Ethendruck | Wasserstoff | Menge Metallocen | Zeit | Ausbeute | Tg | VZ |
|---|---|---|---|---|---|---|---|
| | bar | mmol | mg | min | g | °C | $cm^3/g$ |
| 15 | 10 | 1.08 | 1.18 | 60 | 87.7 | 145 | 119 |

Die für die Mikrostruktur charakteristischen Peaks bei 28,0, 31,5, 33,1, 41,3, 42,2, 47,7, 48,8 ppm fehlten im $^{13}C$-NMR-Spektrum.

Beispiel 16:

Die Polymere aus den Beispielen 8 bis 15 wurden in einer Plattenpresse bei 250°C zu 1 mm dicken Platten gepreßt. Daraus wurden 50 mm $\times$ 10 mm große Proben ausgeschnitten. Die Temperaturabhängigkeit des mechanischen tan $\delta$ wurde mit einem Torsionspendelgerät (Fa. Zwick) bestimmt. Die Ergebnisse für Beispiel 8,9 und 15 in Figuren 3 und 4 dargestellt.

Beispiel 17:

Herstellung eines Polymers für die Herstellung teilkristalliner Schäume In einem 1,5 $dm^3$-Autoklav, der vorher gründlich mit Ethen gespült wurde, werden 600 $cm^3$ einer 85 gew.%igen Lösung von Norbornen in Toluol vorgelegt. Durch mehrfaches Aufdrücken von Ethen (6 bar) wurde die Lösung gesättigt. In den so vorbereiteten Reaktor wurden im Gegenstrom 5 $cm^3$ toluolische Methylaluminoxanlösung (10,1 gew. %ige Methylaluminoxanlösung der Molmasse 1300 g/mol nach kryoskopischer Bestimmung) dosiert und 30 Minuten bei 70°C gerührt. Eine Lösung von 0,16 mg Isopropylen-(9-fluorenyl)-(1-(3-methyl)cyclopentadienyl)zirkondichlorid in 5 $cm^3$ toluolischer Methylaluminoxanlösung wurde nach 15 minütiger Voraktivierung zugegeben. (Im Falle einer Wasserstoffregelung kann an dieser Stelle Wasserstoff aufgepreßt werden.)

Unter Rühren (750 Upm) wurde eine Stunde polymerisiert, wobei der Ethendruck durch Nachdosieren bei 6 bar gehalten wurde. Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10%iger Salzsäure und Aceton gewaschen. Abschließend wurde mit Wasser neutral gewaschen, der Rückstand in Aceton aufgeschlämmt und erneut filtriert. Das so gereinigte Polymer wurde bei 80°C im Vakuum (0,2 bar) 15 Stunden getrocknet.
Es wurden 54 g des Produktes erhalten bei einer Aktivität von 63.523 g/(mmol*h). Das Produkt wies eine Glastemperatur von 133°C, eine Schmelztemperatur von 289°C und eine Viskositätszahl von 131 $cm^3/g$ auf. Das Norbornen/ Ethen-Einbauverhältnis ist gemäß NMR-Spektrum ca. 50 Mol% Norbornen zu 50 Mol% Ethen.

Beispiel 18:

Es wurde ein statistischer Copolymer von Ethylen und 1,4,5,8-Dimethano-1,2,3,4,4a,5,8,8a-octahydronaphthalin nach der Vorschrift in EP-A-384 693 hergestellt. Das Copolymer wies eine Glastemperatur von 79°C und eine Viskositätszahl von 64 $cm^3/g$ auf.
Es wurden der E-Modul und der temperaturabhängige Verlauf des tan δ bestimmt. Der E-Modul ist in Fig. 6 dargestellt. Der Verlauf des tan δ ist im Vergleich zu einem Copolymer des Typs B mit vergleichbarer Glastemperatur ist in Fig. 7 dargestellt.

Beispiel 19:

Es wurden entsprechend der Darstellung in Beispiel 18 weitere Copolymere hergestellt. Die Angaben zu Glastemperaturen und Viskositätszahl sind in Tabelle 6 zusammengefaßt. Die E-Moduln sind in Fig. 6 dargestellt. Der Verlauf des tan δ ist jeweils im Vergleich zu einem Copolymer des Typs B mit vergleichbarer Glastemperatur in den Fig. 8 und 9 dargestellt.

Tabelle 6

| Beispiel | Tg | VZ | E-Modul | tan δ |
|---|---|---|---|---|
| | °C | $cm^3/g$ | MPA | |
| 18 | 79 | 64 | 2294 | Fig. 7 |
| 19a | 124 | 55 | 2785 | Fig. 8 |
| 19b | 140 | 68 | 3015 | Fig. 9 |

Beispiel 20:

Verschäumen durch thermoplastische Schaumextrusion

Es wurde ein Norbornen/Ethen-Copolymer des Typs A, hergestellt unter Verwendung von Isopropylen-(cyclopentadienyl)-(9-fluorenyl)zirkondichlorid, das eine Glastemperatur von 135°C und eine Viskositätszahl von 110 ml/g aufweist, mit 2 Gew. % des Treibmittel Hydrocerol HP 40 P (Fa. Boehringer Ingelheim) in einem Taumelmischer vermischt und 12 Stunden bei 80°C und 0,2 bar getrocknet.
Es wurde in einem Einzelschneckenextruder bei 240°C Massetemperatur und unterschiedlichen Drehgeschwindigkeiten extrudiert. Es wurde ein Schaum erhalten, der weiß ist und sich durch eine glatte, glänzende Oberfläche auszeichnet. Die mikroskopische Untersuchung zeigte, daß ein geschlossenporiger Schaum mit unterschiedlicher Zellgröße vorlag. Die Ergebnisse sind in Tabelle 7 zusammengefaßt.

Beispiel 21:

Verschäumen durch thermoplastische Schaumextrusion

Es wurde ein Norbornen/Ethen-Copolymer des Typs A, hergestellt unter Verwendung von Isopropylen-(cyclopentadienyl)-(9-fluorenyl)zirkondichlorid, das eine Glastemperatur von 135°C und eine Viskositätszahl von 110 ml/g aufweist, mit 4 Gew.% des Treibmittel Hydrocerol HP 40 P (Fa. Boehringer Ingelheim) in einem Taumelmischer vermischt und 12 Stunden bei 80°C und 0,2 bar getrocknet.
Es wurde in einem Einzelschneckenextruder bei 240°C Massetemperatur und unterschiedlichen Drehgeschwindigkeiten extrudiert. Es wurde ein Schaum erhalten, der weiß ist und sich durch eine glatte, glänzende Oberfläche auszeichnet. Die mikroskopische Untersuchung zeigte, daß ein geschlossenporiger Schaum mit unterschiedlicher Zetlgröße vorlag. Die Ergebnisse sind in Tabelle 7 zusammengefaßt.

Tabelle 7

| Beispiel | Anteil Treibmittel | Drehzahl | Bemerkungen | durchschnittlicher Zelldurchmesser |
|---|---|---|---|---|
| | Gew.% | Upm | | µm |
| 20 | 2 | 100 | weißer Strang, Durchmesser ca. 0,6-0,7 mm | ca. 40 |
| 20 | 2 | 150 | weißer Strang, Durchmesser ca. 0,8 mm | ca. 60-80 |
| 20 | 2 | 200 | weißer Strang, Durchmesser ca. 0,85 mm | ca. 80-100 |
| 21 | 4 | 100 | weißer Strang, Durchmesser ca. 0,7-0,8 mm | ca.100 |
| 21 | 4 | 150 | weißer Strang, Durchmesser ca. 0,8-0,9 mm | ca.100-150 |
| 21 | 4 | 200 | weißer Strang, Durchmesser ca. 0.75-0.85 mm | ca.200 |

Beispiel 22:

Verschäumen durch thermoplastische Schaumextrusion

Es wurde ein Norbornen/Ethen-Copolymer des Typs A mit 2 Gew.-% des Treibmittels Hydrocerol HP 40 P (Fa. Boehringer Ingelheim) vermischt. Das Norbornen/Ethen-Copolymer wurde hergestellt unter Verwendung von Isopropylen-(cyclopentadienyl)-(9-fluorenyl)zirkondichlorid und wies eine Glastemperatur von 135°C und eine Viskositätszahl von 110 ml/g auf. Das Material wurde in einem Einzelschneckenextruder mit 240°C Massetemperatur über eine Breitschlitzdüse extrudiert.
Es wurden Platten mit Dicken von 1 mm und 2 mm eines geschlossenporigen Schaumes hergestellt.
Die Temperaturprofile, Dichten und Formen der hergestellten Platten gehen aus der nachfolgenden Tabelle 8 hervor.

Tabelle 8

| Beispiel | Temperaturprofil/ | Dichte | Poren |
|---|---|---|---|
| | [°C] | [kg/m3] | |
| 22 a | 200 (Zone 1)<br>240 (Zone 2-4)<br>230 (Düse) | 570 | geschlossenzellig, 0 50-100 µm |
| 22 b | 200 (Zone 1)<br>240 (Zone 2,3)<br>230 (Zone 4)<br>220 (Düse) | 600 | geschlossenzellig, Ø 20-150 µm |
| 22 c | 200 (Zone 1)<br>240 (Zone 2)<br>230 (Zone 3)<br>220 (Zone 4)<br>200 (Düse) | 580 | geschlossenzellig, Ø 50-150 µm |

Beispiel 23:

Verschäumen durch thermoplastischen Schaumspritzguß

Es wurde ein Cycloolefincopolymer wie in Beispiel 20 beschrieben hergestellt und mit 2 Gew.-% Hydrocerol HP 40 P vermischt. Das Material wurde mit einer Spritzgußmaschine mit einem Temperaturprofil von 25°C (Einzug) 200°C/210°C/240°C/230°C/ 240°C (Kopf), verarbeitet. Die Werkzeugtemperatur lag bei 70°C, es wurde ein Plattenwerkzeug mit 8 mm × 12 mm Fläche und variabler Dicke verwendet. Die Dicken, Dichten und Porenstruktureinheiten der hergestellten Platten gehen aus der nachfolgenden Tabelle 9 hervor.

Tabelle 9

| Beispiel | Dicke | Dichte | Porenstruktur/-verbindung |
|---|---|---|---|
| Platten | mm | [kg/$m^{3}$] | |
| 23 a | 4 mm | 715 kg/$m^3$ | geschlossenzellig, massive Randschicht |
| 23 b | 4 mm | 793 kg/$m^3$ | geschlossenzellig, massive Randschicht |
| 23 c | 4 mm | 885 kg/$m^3$ | geschlossenzellig, massive Randschicht |
| 23 d | 8 mm | 743 kg/$m^3$ | geschlossenzellig, Integralschaum |
| 23 e | 8 mm | 817 kg/$m^3$ | geschlossenzellig, Integralschaum |
| 23 f | 20 mm | 737 kg/$m^3$ | geschiossenzellig, Integralschaum |
| 23 g | 20 mm | 651 kg/$m^3$ | geschlossenzellig, Integralschaum |
| 23 h | 20 mm | 520 kg/$m^3$ | geschlossenzellig, Integralschaum |
| 23 i | 20 mm | 410 kg/$m^3$ | geschlossenzellig, Integralschaum Ø 40-200 μm |

**Patentansprüche**

1. Schaum enthaltend mindestens ein Cycloolefincopolymer, welches zu 20 bis 99 Gew.% polymerisierte Einheiten enthält, die sich ableiten von einem oder mehreren cyclischen Olefinen, wobei das Cycloolefincopolymer eine ausgewählte Mikrostruktur aufweist, die **gekennzeichnet ist durch**

   a) einen intrinsischen E-Modul $E_i$, der eine Abhängigkeit von der Glastemperatur $T_g$ des Cycloolefinpolymeren nach der Beziehung

   $$E_i = (0{,}0025\ [Gpa/°C] \times T_g\ [°C] + B\ [Gpa]$$

   aufweist, worin B 2,93 bis 3,19 beträgt, oder **durch**
   b) einen mechanischen tanδ Wert von >0,014 bei einer Temperatur 30°C unterhalb der Glastemperatur, oder **durch**
   c) eine Schmelztemperatur des Cycloolefincopolymeren oberhalb von 200°C.

2. Schaum nach Anspruch 1 enthaltend mindestens ein Cycloolefincopolymer, welches 20 bis 95 Gew.-%, bezogen auf die Gesamtmasse des Cycloolefincopolymers, polymerisierte Einheiten enthält, welche sich, ableiten von einem oder mehreren polycyclischen Olefinen der Formeln I, II, III, IV, V oder VI,

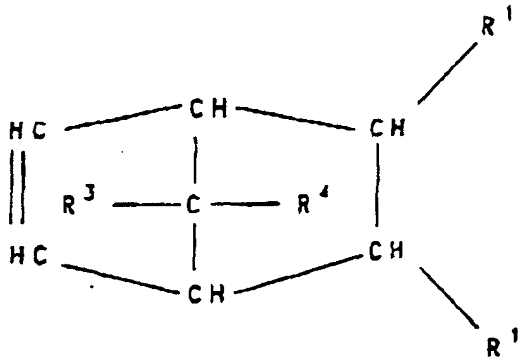

(I),

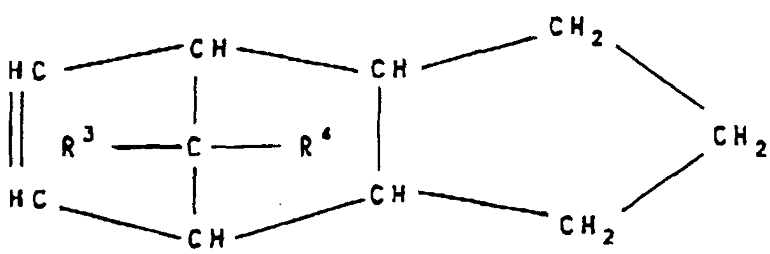

(II),

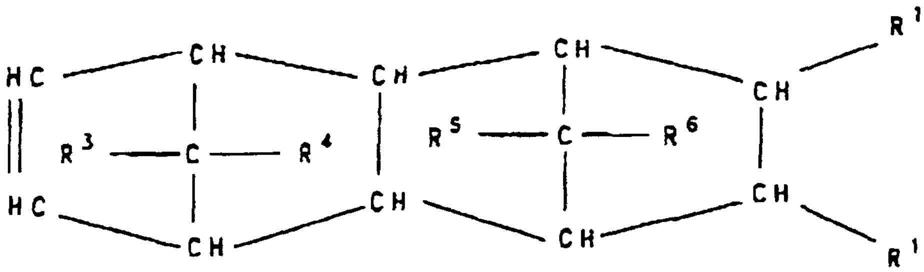

(III),

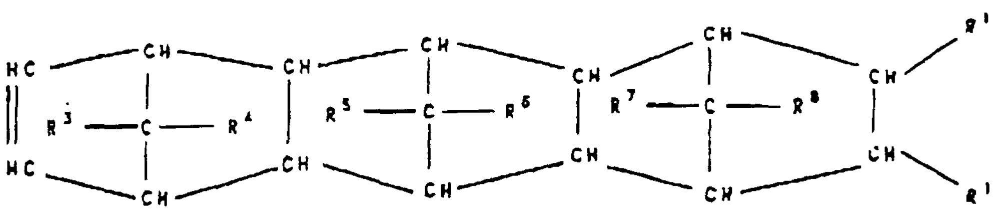

(IV),

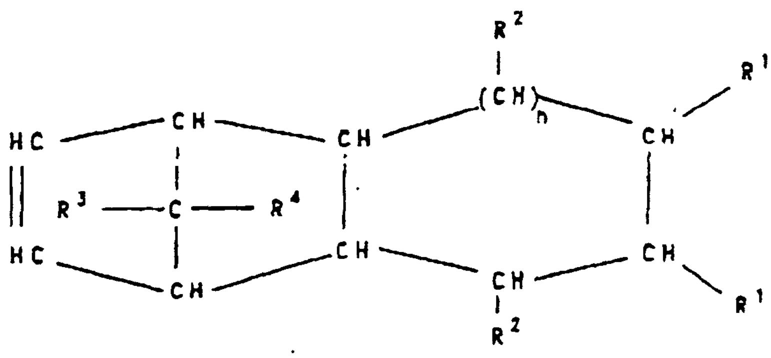

(V).

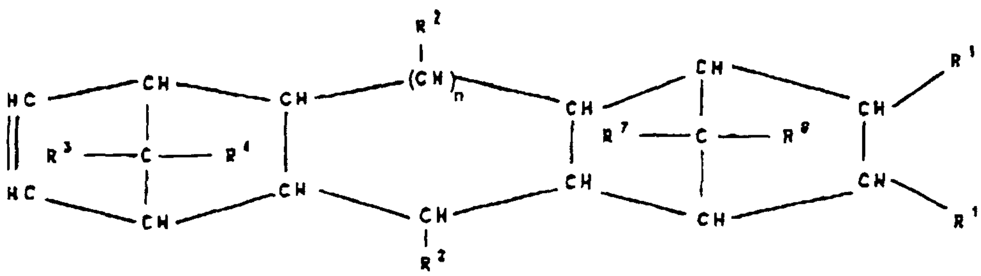

(VI),

worin $R^1$, $R^2$, $R^3$, $R^4$, $R^5$, $R^6$, $R^7$ und $R^8$ gleich oder verschieden sind und ein Wasserstoffatom, einen linearen oder verzweigten, gesättigten oder ungesättigten $C_1$-$C_{20}$-Alkylrest, $C_6$-$C_{18}$-Arylrest, $C_7$-$C_{20}$-Alkylenarylrest, einen cyclischen oder acyclischen $C_2$-$C_{20}$-Alkenylrest bedeuten, oder einen gesättigten, ungesättigten oder aromatischen Ring bilden, wobei gleiche Reste $R^1$ bis $R^8$ in den verschiedenen Formeln I bis VI eine unterschiedliche Bedeutung haben können, worin n eine ganze Zahl von 0 bis 5 ist und 5 bis 80 Gew.-%, bezogen auf die Gesamtmasse des Cycloolefincopolymers, polymerisierte Einheiten, welche sich ableiten von einem oder mehreren acyclischen Olefinen der Formel VII

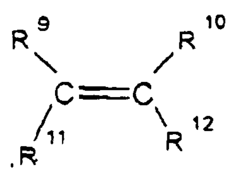

(VII).

worin $R^9$, $R^{10}$, $R^{11}$ und $R^{12}$ gleich oder verschieden sind und ein Wasserstoffatom, einen linearen, verzweigten, gesättigten oder ungesättigten $C_1$-$C_{20}$-Kohlenwaserstoffrest oder einen $C_6$-$C_{18}$-Arylrest bedeuten und gegebenenfalls polymerisierte Einheiten von einem oder mehreren monocyclischen Olefinen der Formel VIII

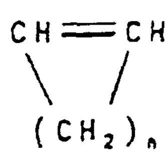

(VIII),

worin n eine Zahl von 2 bis 10 ist.

3. Schaum nach Anspruch 1 oder 2, enthaltend ein oder mehrere Hohlräume, die ein oder mehrere gasförmige Stoffe enthalten können.

4. Schaum nach einem oder mehreren der Ansprüche 1 bis 3, enthaltend mindestens ein Cycloolefincopolymer, welches polymerisierte Einheiten enthält, die sich ableiten lassen von polycyclischen Olefinen der Formeln I oder

III, und polymerisierte Einheiten, die sich ableiten lassen von acyclischen Olefinen der Formel VII.

**5.** Schaum nach einem oder mehreren der Ansprüche 1 bis 4, enthaltend mindestens ein Cycloolefincopolymer, welches polymerisierte Einheiten enthält, die sich von Norbornen und Ethylen ableiten lassen.

**6.** Schaum nach einem oder mehreren der Ansprüche 1 bis 5, enthaltend mindestens ein vernetztes Cycloolefincopolymer.

**7.** Schaum nach einem oder mehreren der Ansprüche 1 bis 6, wobei das Cycloolefincopolymer eine Glastemperatur von 50 °C bis 300 °C aufweist.

**8.** Schaum nach einem oder mehreren der Ansprüche 1 bis 7, wobei das Cycloolefincopolymer eine Glastemperatur von 70 °C bis 250 °C aufweist.

**9.** Schaum nach einem oder mehreren der Ansprüche 1 bis 8, wobei das Cycloolefincopolymer Viskositätszahlen von 50 $cm^3/g$ bis 300 $cm^3/g$ aufweist.

**10.** Schaum nach einem oder mehreren der Ansprüche 1 bis 9, wobei das Cycloolefincopolymer Viskositätszahlen von 60 $cm^3/g$ bis 200 $cm^3/g$ aufweist.

**11.** Schaum nach einem oder mehreren der Ansprüche 1 bis 10, wobei das Cycloolefincopolymer einen Zug-E-Modul > 3000 Mpa aufweist.

**12.** Schaum nach einem oder mehreren der Ansprüche 1 bis 11, wobei das Cycloolefincopolymer einen mechanischen Verlustfaktor tan $\delta$ > 0,016 bei 30 °C unterhalb der Glastemperatur aufweist.

**13.** Schaum nach einem oder mehreren der Ansprüche 1 bis 12, wobei zum Schäumen ein oder mehrere Treibmittel in einem Anteil von 0,01 Gew.-% bis 20 Gew.-% verwendet werden.

**14.** Schaum nach einem oder mehreren der Ansprüche 1 bis 13, wobei zum Schäumen ein oder mehrere Treibmittel in einem Anteil von 0,1 Gew.-% bis 10 Gew.-% verwendet werden.

**15.** Schaum nach einem oder mehreren der Ansprüche 1 bis 14, wobei als Treibmittel eine oder mehrere feste oder flüssige Substanzen, die durch Zersetzung, Umsetzung oder Verdampfung Gase freisetzen und/oder ein oder mehrere Gase verwendet werden.

**16.** Schaum nach einem oder mehreren der Ansprüche 1 bis 15, wobei beim Schäumen 0,01 Gew.-% bis 20 Gew.-% eines oder mehrerer Nukleierungsmittel verwendet werden.

**17.** Schaum nach einem oder mehreren der Ansprüche 1 bis 16, wobei beim Schäumen 0.1 Gew.-% bis 10 Gew.-%, eines oder mehrerer Nukleierungsmittel verwendet werden.

**18.** Schaum nach einem oder mehreren der Ansprüche 1 bis 17, wobei beim Schäumen 0,01 Gew.-% bis 80 Gew.-% eines oder mehrere Additive verwendet werden.

**19.** Schaum nach einem oder mehreren der Ansprüche 1 bis 18, wobei beim Schäumen 0,05 Gew.-% bis 20 Gew.-% eines oder mehrere Additive verwendet werden.

**20.** Schaum nach einem oder mehreren der Ansprüche 1 bis 19, wobei ein bestimmter Teil des Cycloolefincopolymeren durch ein Fremd-Polymer mit dem gleichen Gewichtsanteil ersetzt wird und der Gewichtsanteil 0 Gew.-% bis 90 Gew.-% beträgt.

**21.** Schaum nach einem oder mehreren der Ansprüche 1 bis 20, wobei ein bestimmter Teil des Cycloolefincopolymeren durch ein Fremd-Polymer mit dem gleichen Gewichtsanteil ersetzt wird und der Gewichtsanteil 0 Gew.-% bis 50 Gew.-% beträgt.

**22.** Schaum nach Anspruch 21, wobei als Fremd-Polymer mindestens eines der Polymere aus der Gruppe Polypropylen, Polypropylencopolymer oder Polyethylen verwendet werden.

**23.** Verfahren zur Herstellung eines Schaums nach Anspruch 1, wobei mindestens ein Cycloolefincopolymer mit Mikrostruktur a), b) oder c) mit mindestens einem Treibmittel verschäumt werden.

**24.** Verwendung eines Schaumes nach einem oder mehreren der Ansprüche 1 bis 22 für die Herstellung von Platten, Folien, Schläuchen, Rohren, Stangen, Bändern und Behältern.

**25.** Verwendung eines Schaums nach einem oder mehreren der Ansprüche 1 bis 22 zur Herstellung von extrudierten Formteilen, Blasformteilen, Spritzgußteilen und formgeschäumten Teilen.

**26.** Verwendung eines Schaumes nach einem oder mehreren der Ansprüche 1 bis 22 für die Herstellung von Formteilen aus vorgeschäumten Perlen oder Partikeln.

**27.** Verwendung eines Schaumes nach einem oder mehreren der Ansprüche 1 bis 22 als Bestandteil eines Verbundmaterials.

**28.** Verwendung eines Schaums nach einem oder mehreren der Ansprüche 1 bis 22 im Bereich Automobil, Bau, Transport, Verpackung und Isolierung.

## Claims

**1.** A foam comprising at least one cycloolefin copolymer which comprises from 20 to 99% by weight of polymerized units derived from one or more cyclic olefins, wherein the cycloolefin copolymer has a selected microstructure **characterized by**

a) an intrinsic modulus of elasticity $E_i$ which has a dependence on the glass transition temperature $T_g$ of the cycloolefin copolymer described by the relationship

$$E_i = (0.0025\ [Gpa/°C] \times Tg\ [°C] + B\ [Gpa],$$

where B is from 2.93 to 3.19, or by
b) a mechanical tan $\delta$ of > 0.014 at a temperature 30°C below the glass transition temperature, or by
c) a melting point of the cycloolefin copolymer of above 200°C.

**2.** A foam as claimed in claim 1 comprising at least one cycloolefin copolymer which comprises from 20 to 95% by weight, based on the total mass of the cycloolefin copolymer, of polymerized units which are derived from one or more polycyclic olefins of the formulae I, II, III, IV, V or VI,

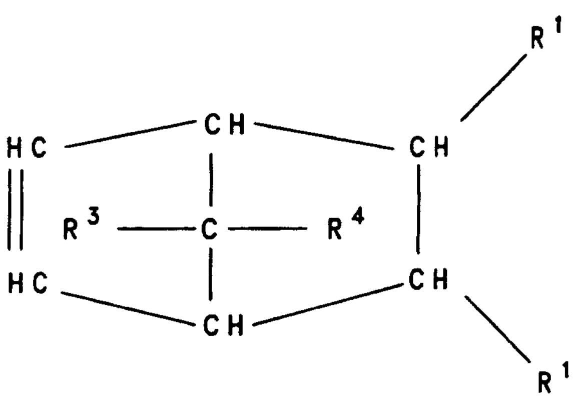

(I),

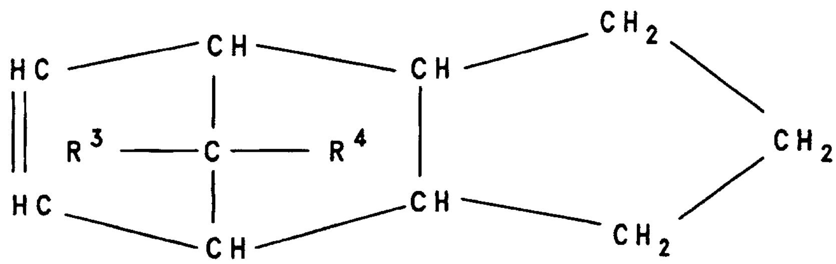

(II),

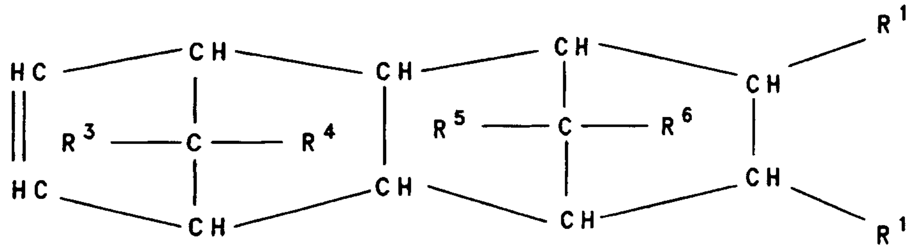

(III),

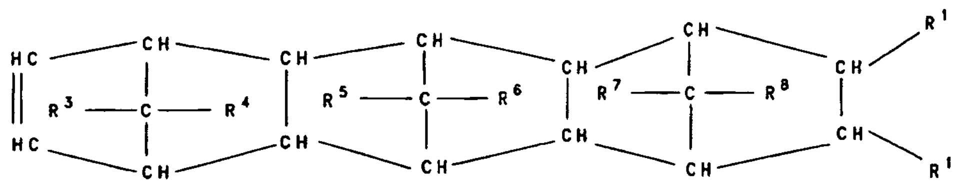

(IV),

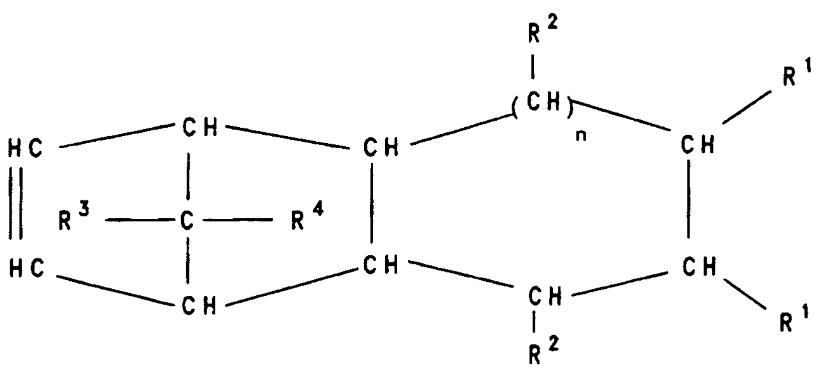

(V),

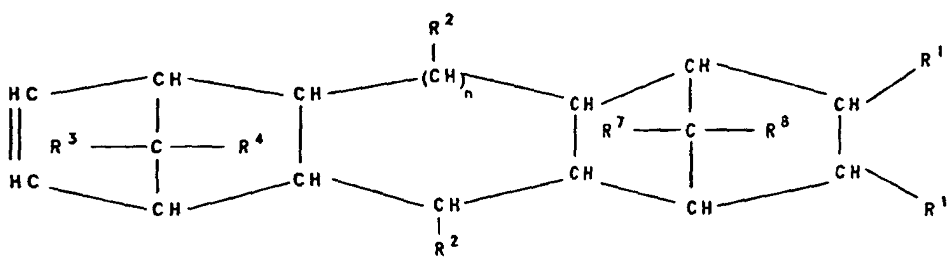

(VI),

where $R^1$, $R^2$, $R^3$, $R^4$, $R^5$, $R^6$, $R^7$ and $R^8$ are identical or different and are each a hydrogen atom, a linear or

branched, saturated or unsaturated $C_1$-$C_{20}$-alkyl radical, $C_6$-$C_{18}$-aryl radical, $C_7$-$C_{20}$-alkylenearyl radical, a cyclic or acyclic $C_2$-$C_{20}$-alkenyl radical, or form a saturated, unsaturated or aromatic ring, where the same radicals $R^1$ to $R^8$ in the various formulae I to VI can have different meanings, where n is an integer from 0 to 5, and from 5 to 80% by weight, based on the total mass of the cycloolefin copolymer, of polymerized units which are derived from one or more acyclic olefins of the formula VII

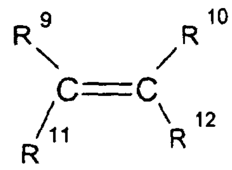 (VII),

where $R^9$, $R^{10}$, $R^{11}$ and $R^{12}$ are identical or different and are each a hydrogen atom, a linear, branched, saturated or unsaturated $C_1$-$C_{20}$-hydrocarbon radical or a $C_6$-$C_{18}$-aryl radical, and, if desired, polymerized units of one or more monocyclic olefins of the formula VIII

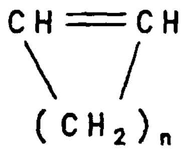 (VIII),

where n is a number from 2 to 10.

3. A foam as claimed in claim 1 or 2 containing one or more voids which can contain one or more gaseous substances.

4. A foam as claimed in one or more of claims 1 to 3, comprising at least one cycloolefin copolymer which comprises polymerized units which can be derived from polycyclic olefins of the formulae I or III, and polymerized units which can be derived from acyclic olefins of the formula VII.

5. A foam as claimed in one or more of claims 1 to 4, comprising at least one cycloolefin copolymer which contains polymerized units which can be derived from norbornene and ethylene.

6. A foam as claimed in one or more of claims 1 to 5, comprising at least one crosslinked cycloolefin copolymer.

7. A foam as claimed in one or more of claims 1 to 6, wherein the cycloolefin copolymer has a glass transition temperature of from 50 to 300°C.

8. A foam as claimed in one or more of claims 1 to 7, wherein the cycloolefin copolymer has a glass transition temperature of from 70 to 250°C.

9. A foam as claimed in one or more of claims 1 to 8, wherein the cycloolefin copolymer has viscosity numbers of from 50 to 300 $cm^3/g$.

10. A foam as claimed in one or more of claims 1 to 9, wherein the cycloolefin copolymer has a viscosity number of from 60 to 200 $cm^3/g$.

11. A foam as claimed in one or more of claims 1 to 10, wherein the cycloolefin copolymer has a tensile E modulus of > 3000 MPa.

12. A foam as claimed in one or more of claims 1 to 11, wherein the cycloolefin copolymer has a mechanical loss factor tan $\delta$ of > 0.016, at 30°C below the glass transition temperature.

13. A foam as claimed in one or more of claims 1 to 12, wherein foaming is carried out using one or more blowing agents in a proportion of from 0.01 to 20% by weight.

**14.** A foam as claimed in one or more of claims 1 to 13, wherein foaming is carried out using one or more blowing agents in a proportion of from 0.1 to 10% by weight.

**15.** A foam as claimed in one or more of claims 1 to 14, wherein blowing agents used are one or more solid or liquid substances which liberate gases by decomposition, reaction or vaporization and/or one or more gases.

**16.** A foam as claimed in one or more of claims 1 to 15, wherein from 0.01 to 20% by weight of one or more nucleating agents are used in the foaming procedure.

**17.** A foam as claimed in one or more of claims 1 to 16, wherein from 0.1 to 10% by weight of one or more nucleating agents are used in the foaming procedure.

**18.** A foam as claimed in one or more of claims 1 to 17, wherein from 0.01 to 80% by weight of one or more additives are used in the foaming procedure.

**19.** A foam as claimed in one or more of claims 1 to 18, wherein from 0.05 to 20% by weight of one or more additives are used in the foaming procedure.

**20.** A foam as claimed in one or more of claims 1 to 19, wherein a certain part of the cycloolefin copolymer is replaced by the same proportion by weight of a foreign polymer and the proportion by weight is from 0 to 90% by weight.

**21.** A foam as claimed in one or more of claims 1 to 20, wherein a certain part of the cycloolefin copolymer is replaced by the same proportion by weight of a foreign polymer and the proportion by weight is from 0 to 50% by weight.

**22.** A foam as claimed in claim 21, wherein at least one polymer selected from the group consisting of polypropylene, polypropylene copolymer or polyethylene is used as foreign polymer.

**23.** A process for producing a foam as claimed in claim 1 which comprises foaming at least one cycloolefin copolymer having microstructure a), b) or c) with at least one blowing agent.

**24.** The use of a foam as claimed in one or more of claims 1 to 22 for the production of plates, films, hoses, tubes, rods, bands and containers.

**25.** The use of a foam as claimed in one or more of claims 1 to 22 for producing extruded shaped parts, blow-molded parts, injection-molded parts and mold-foamed parts.

**26.** The use of a foam as claimed in one or more of claims 1 to 22 for producing shaped parts from prefoamed beads or particles.

**27.** The use of a foam as claimed in one or more of claims 1 to 22 as constituent of a composite material.

**28.** The use of a foam as claimed in one or more of claims 1 to 22 in the automobile, building, transport, packaging and insulation sectors.

**Revendications**

**1.** Mousse contenant au moins un copolymère de cyclo-oléfine qui contient à raison de 20 à 99 % en poids des motifs polymérisés qui dérivent d'une ou plusieurs oléfines cycliques, le copolymère de cyclo-oléfine présentant une microstructure choisie qui est **caractérisée par**

a) un module d'élasticité intrinsèque $E_i$ qui présente une dépendance à l'égard de la température de transition vitreuse Tg du polymère de cyclo-oléfine selon la relation

$$E_i = (0,0025\ [Gpa/°C] \times Tg\ [°C] + B\ [Gpa]$$

dans laquelle B va de 2,93 à 3,19, ou par

b) une valeur tan δ mécanique de >0,014 à une température inférieure de 30°C à la température de transition vitreuse, ou par

c) une température de fusion du copolymère de cyclo-oléfine supérieure à 200°C.

**2.** Mousse selon la revendication 1, contenant au moins un copolymère de cyclo-oléfine qui contient de 20 à 95 % en poids, par rapport à la masse totale du copolymère de cyclo-oléfine, de motifs polymérisés qui dérivent d'une ou plusieurs oléfines polycycliques de formules I, II, III, IV, V ou VI,

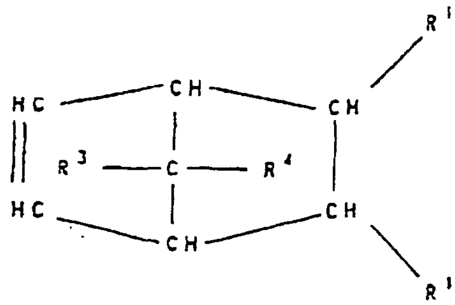

(I),

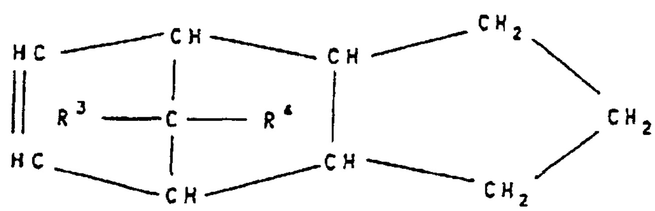

(II),

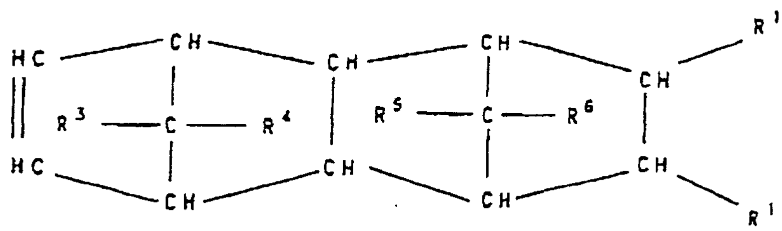

(III),

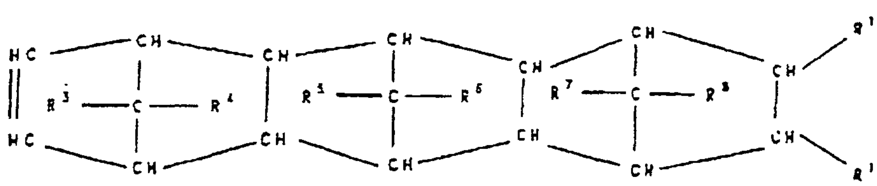

(IV),

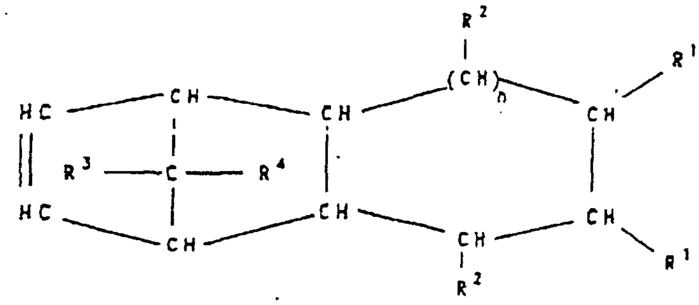

(V).

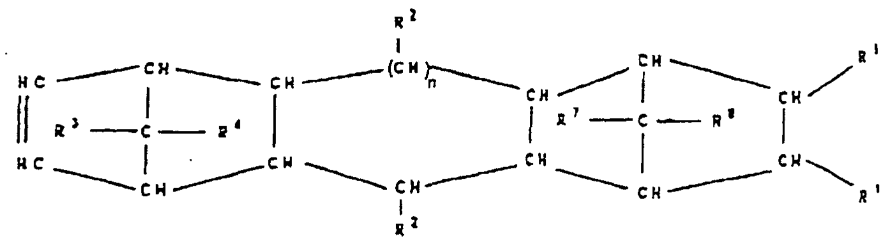

(VI).

dans lesquelles $R^1$, $R^2$, $R^3$, $R^4$, $R^5$, $R^6$, $R^7$ et $R^8$ sont identiques ou différents et représentent un atome d' hydrogène, un radical alkyle en $C_1$-$C_{20}$ linéaire ou ramifié, saturé ou insaturé, un radical aryle en $C_6$-$C_{18}$, un radical alkylène-aryle en $C_7$-$C_{20}$, un radical alcényle en $C_2$-$C_{20}$ cyclique ou acyclique, ou forment un cycle saturé, insaturé ou aromatique, les mêmes radicaux $R^1$ à $R^8$ pouvant avoir des significations différentes dans les diverses formules I à VI, dans lesquelles n est un nombre entier allant de 0 à 5, et de 5 à 80 % en poids, par rapport à la masse totale du copolymère de cyclo-oléfine, de motifs polymérisés qui dérivent d'une ou plusieurs oléfines acycliques de formule VII

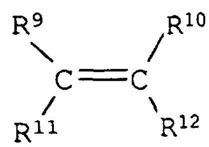

(VII)

dans laquelle $R^9$, $R^{10}$, $R^{11}$ et $R^{12}$ sont identiques ou différents et représentent un atome d'hydrogène, un radical hydrocarboné en $C_1$-$C_{20}$ linéaire, ramifié, saturé ou insaturé ou un radical aryle en $C_6$-$C_{18}$, et éventuellement de motifs polymérisés d'une ou plusieurs oléfines monocycliques de formule VIII

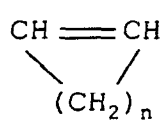

(VIII)

dans laquelle n est un nombre allant de 2 à 10.

**3.** Mousse selon la revendication 1 ou 2, contenant une ou plusieurs cavités qui peuvent contenir une ou plusieurs substances gazeuses.

**4.** Mousse selon un ou plusieurs des revendications 1 à 3, contenant au moins un copolymère de cyclo-oléfine qui contient des motifs polymérisés pouvant dériver d'oléfines polycycliques de formule I ou III, et des motifs polymérisés pouvant dériver d'oléfines acycliques de formule VII.

**5.** Mousse selon un ou plusieurs des revendications 1 à 4, contenant au moins un copolymère de cyclo-oléfine qui

contient des motifs polymérisés pouvant dériver de norbornène et d'éthylène.

6. Mousse selon une ou plusieurs des revendications 1 à 5, contenant au moins un copolymère de cyclo-oléfine réticulé.

7. Mousse selon une ou plusieurs des revendications 1 à 6, dans laquelle le copolymère de cyclo-oléfine présente une température de transition vitreuse de 50°C à 300°C.

8. Mousse selon une ou plusieurs des revendications 1 à 7, dans laquelle le copolymère de cyclo-oléfine présente une température de transition vitreuse de 70°C à 250°C.

9. Mousse selon une ou plusieurs des revendications 1 à 8, dans laquelle le copolymère de cyclo-oléfine présente des indices de viscosité de 50 $cm^3/g$ à 300 $cm^3/g$.

10. Mousse selon une ou plusieurs des revendications 1 à 9, dans laquelle le copolymère de cyclo-oléfine présente des indices de viscosité de 60 $cm^3/g$ à 200 $cm^3/g$.

11. Mousse selon une ou plusieurs des revendications 1 à 10, dans laquelle le copolymère de cyclo-oléfine présente un module d'élasticité en traction de > 3000 Mpa.

12. Mousse selon une ou plusieurs des revendications 1 à 11, dans lequel le copolymère de cyclo-oléfine présente un facteur de perte mécanique tan $\delta$ > 0,016 à 30°C au-dessous de la température de transition vitreuse.

13. Mousse selon une ou plusieurs des revendications 1 à 12, dans laquelle on utilise pour l'expansion un ou plusieurs agents d'expansion en une proportion de 0,01 % en poids à 20 % en poids.

14. Mousse selon une ou plusieurs des revendications 1 à 13, dans laquelle on utilise pour l'expansion un ou plusieurs agents d'expansion en une proportion de 0,1 % en poids à 10 % en poids.

15. Mousse selon une ou plusieurs des revendications 1 à 14, dans laquelle on utilise comme agent d'expansion un ou plusieurs gaz et/ou une ou plusieurs substances solides ou liquides qui libèrent des gaz par décomposition, réaction ou vaporisation.

16. Mousse selon une ou plusieurs des revendications 1 à 15, dans laquelle on utilise lors de l'expansion 0,01 % en poids à 20 % en poids d'un ou plusieurs agents de nucléation.

17. Mousse selon une ou plusieurs des revendications 1 à 16, dans laquelle on utilise lors de l'expansion 0,1 % en poids à 10 % en poids d'un ou plusieurs agents de nucléation.

18. Mousse selon une ou plusieurs des revendications 1 à 17, dans laquelle on utilise lors de l'expansion 0,01 % en poids à 80 % en poids d'un ou plusieurs additifs.

19. Mousse selon une ou plusieurs des revendications 1 à 18, dans laquelle on utilise lors de l'expansion 0,05 % en poids à 20 % en poids d'un ou plusieurs additifs.

20. Mousse selon une ou plusieurs des revendications 1 à 19, dans laquelle une certaine proportion du copolymère de cyclo-oléfine est remplacée par un polymère étranger ayant la même proportion en poids et la proportion en poids va de 0 % en poids à 90 % en poids.

21. Mousse selon une ou plusieurs des revendications 1 à 20, dans laquelle une certaine proportion du copolymère de cyclo-oléfine est remplacée par un polymère étranger ayant la même proportion en poids et la proportion en poids va de 0 % en poids à 50 % en poids.

22. Mousse selon la revendication 21, dans laquelle on utilise en tant que polymère étranger au moins l'un des polymères choisis dans le groupe constitué par le polypropylène, un copolymère de polypropylène et le polyéthylène.

23. Procédé pour la préparation d'une mousse selon la revendication 1, dans lequel au moins un copolymère de cyclo-oléfine à microstructure a), b) ou c) est expansé à l'aide d'au moins un agent d'expansion.

**24.** Utilisation d'une mousse selon une ou plusieurs des revendications 1 à 22, pour la fabrication de plaques, de films, de tuyaux souples, de tubes, de barres, de rubans et de récipients.

**25.** Utilisation d'une mousse selon une ou plusieurs des revendications 1 à 22, pour la fabrication de pièces moulées extrudées, de pièces moulées par soufflage, de pièces moulées par injection et de pièces en mousse moulées in situ.

**26.** Utilisation d'une mousse selon une ou plusieurs des revendications 1 à 22, pour la fabrication de pièces moulées à base de particules ou de perles pré-expansées.

**27.** Utilisation d'une mousse selon une ou plusieurs des revendications 1 à 22, en tant que composant d'un matériau composite.

**28.** Utilisation d'une mousse selon une ou plusieurs des revendications 1 à 22, dans le secteur de l'automobile, du bâtiment, du transport, de l'emballage et de l'isolation.

Fig. 1

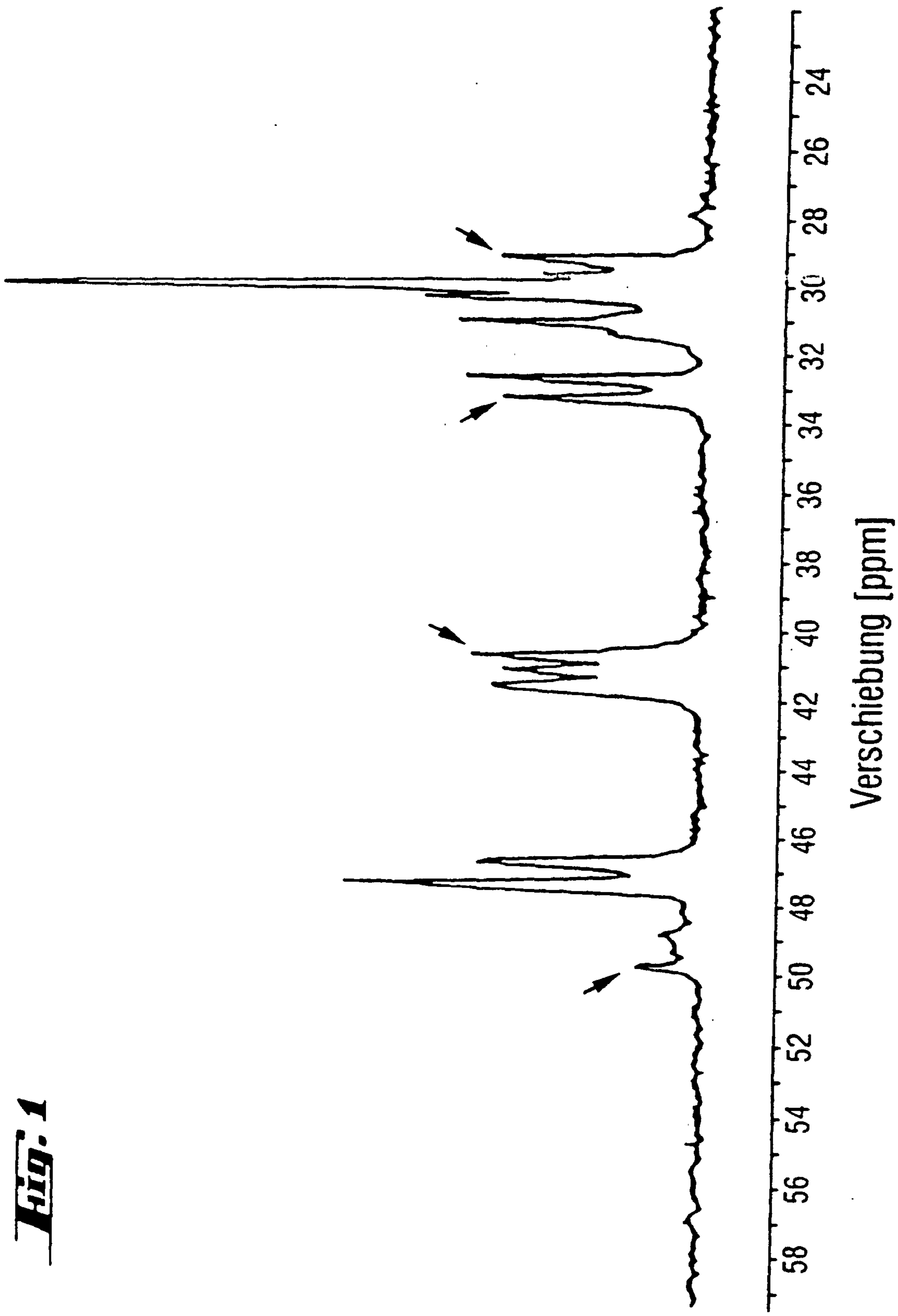
24
26
28
30
32
34
36
38
40
42
44
46
48
50
52
54
56
58
Verschiebung [ppm]

Fig. 2

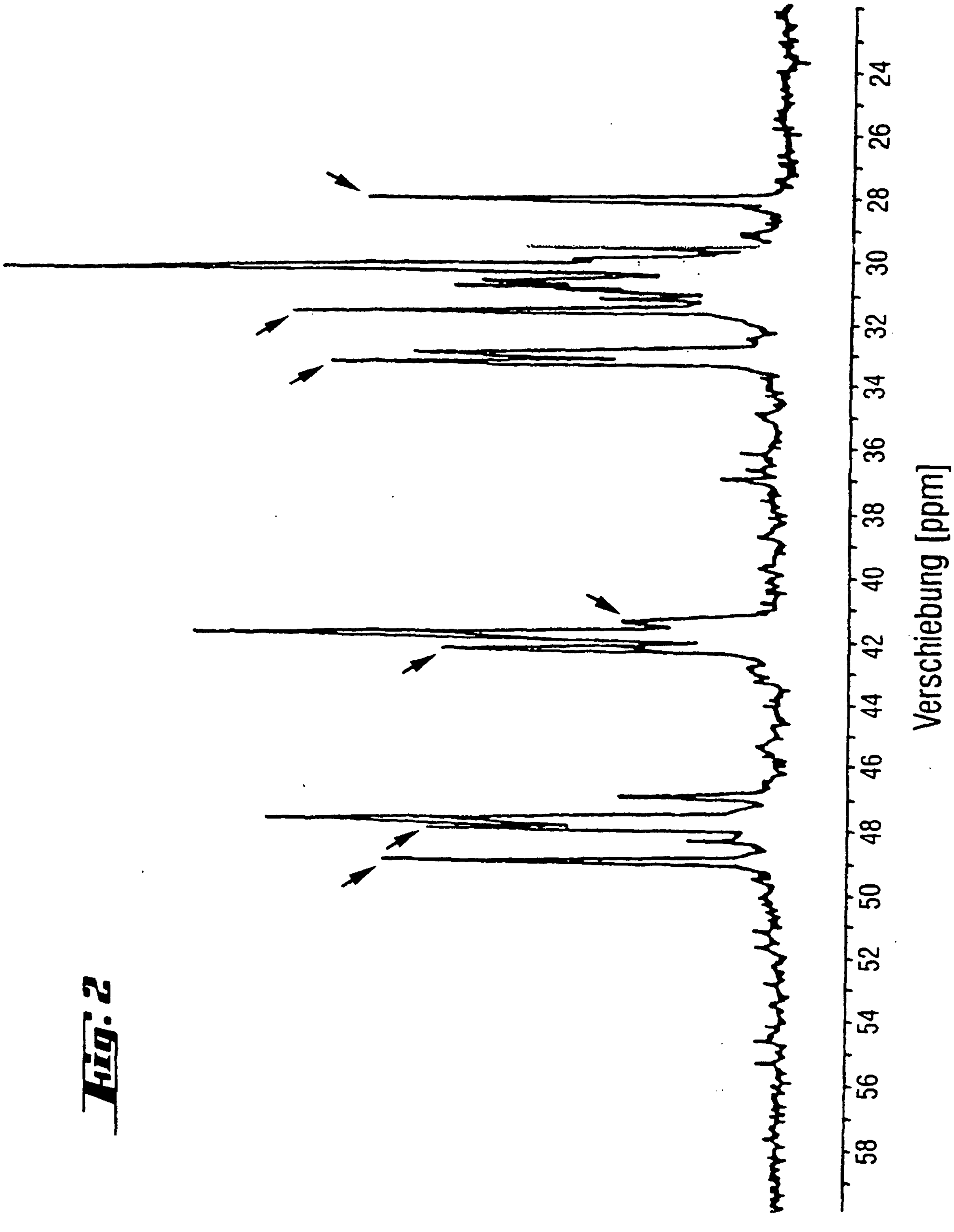
24
26
28
30
32
34
36
38
40
42
44
46
48
50
52
54
56
58
Verschiebung [ppm]

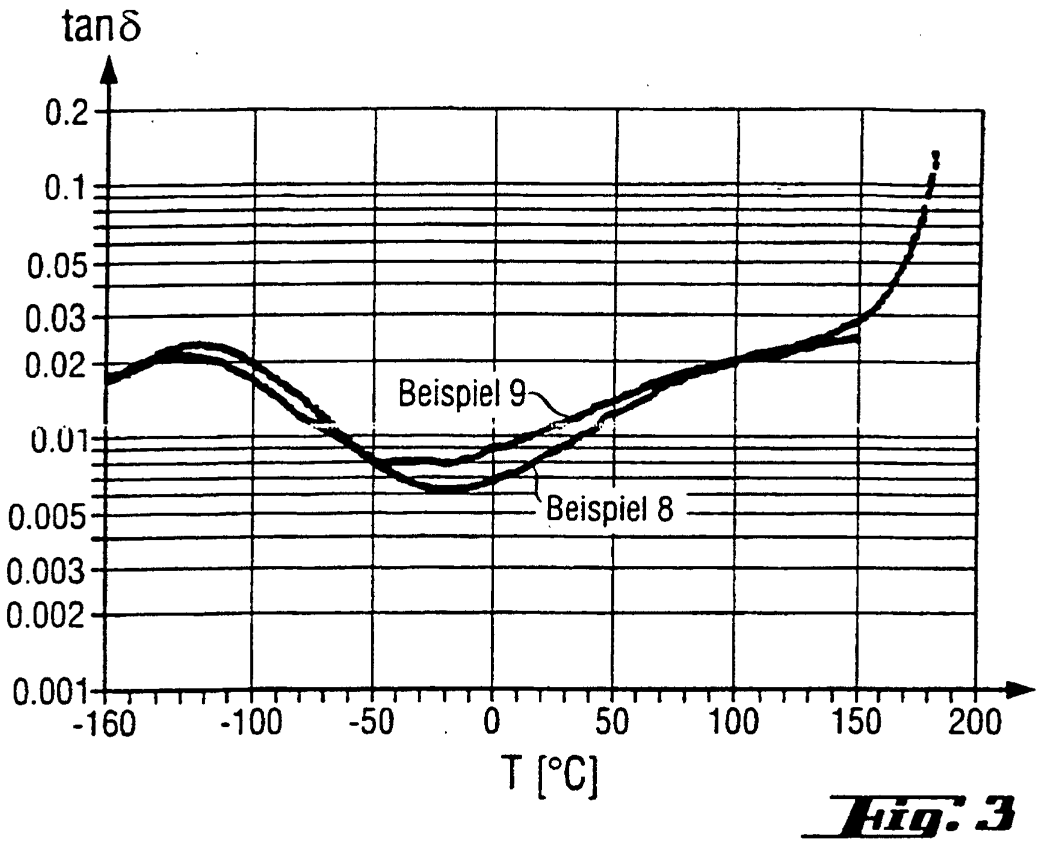
tanδ
0.2
0.1
0.05
0.03
0.02
0.01
0.005
0.003
0.002
0.001
-160
-100
-50
0
50
100
150
200
T [°C]
Beispiel 9
Beispiel 8

Fig. 3

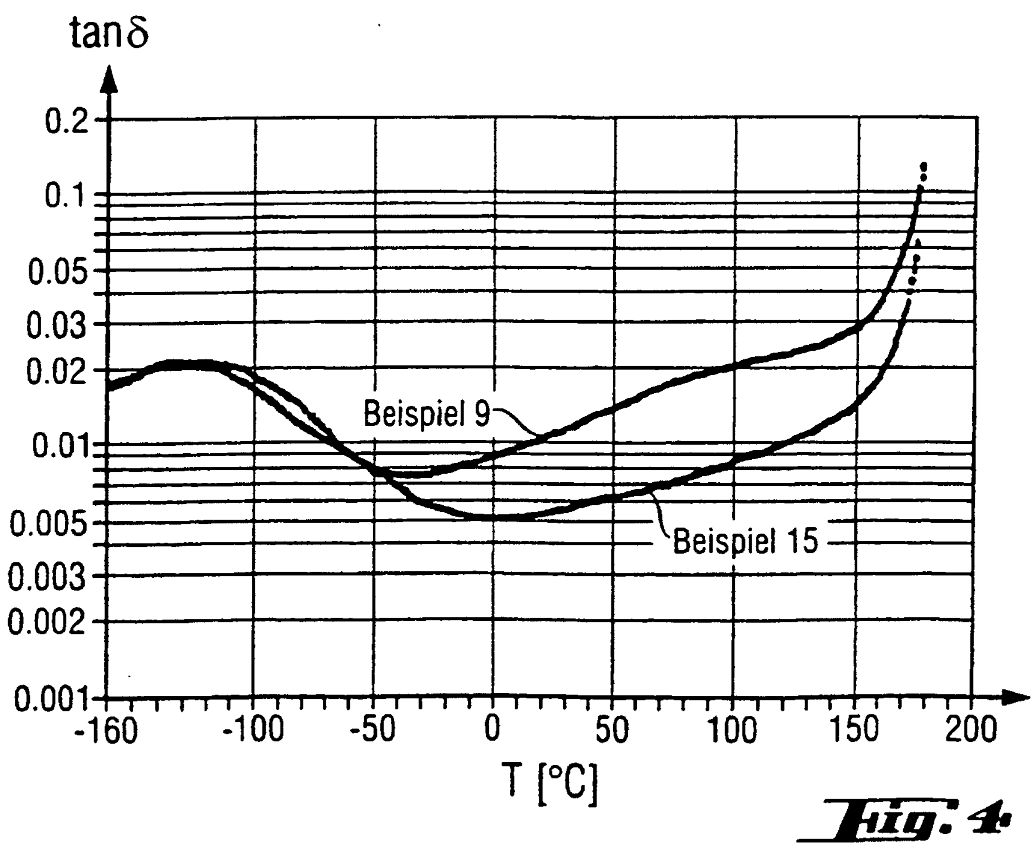
tanδ
0.2
0.1
0.05
0.03
0.02
0.01
0.005
0.003
0.002
0.001
-160
-100
-50
0
50
100
150
200
T [°C]
Beispiel 9
Beispiel 15

Fig. 4

Fig. 5

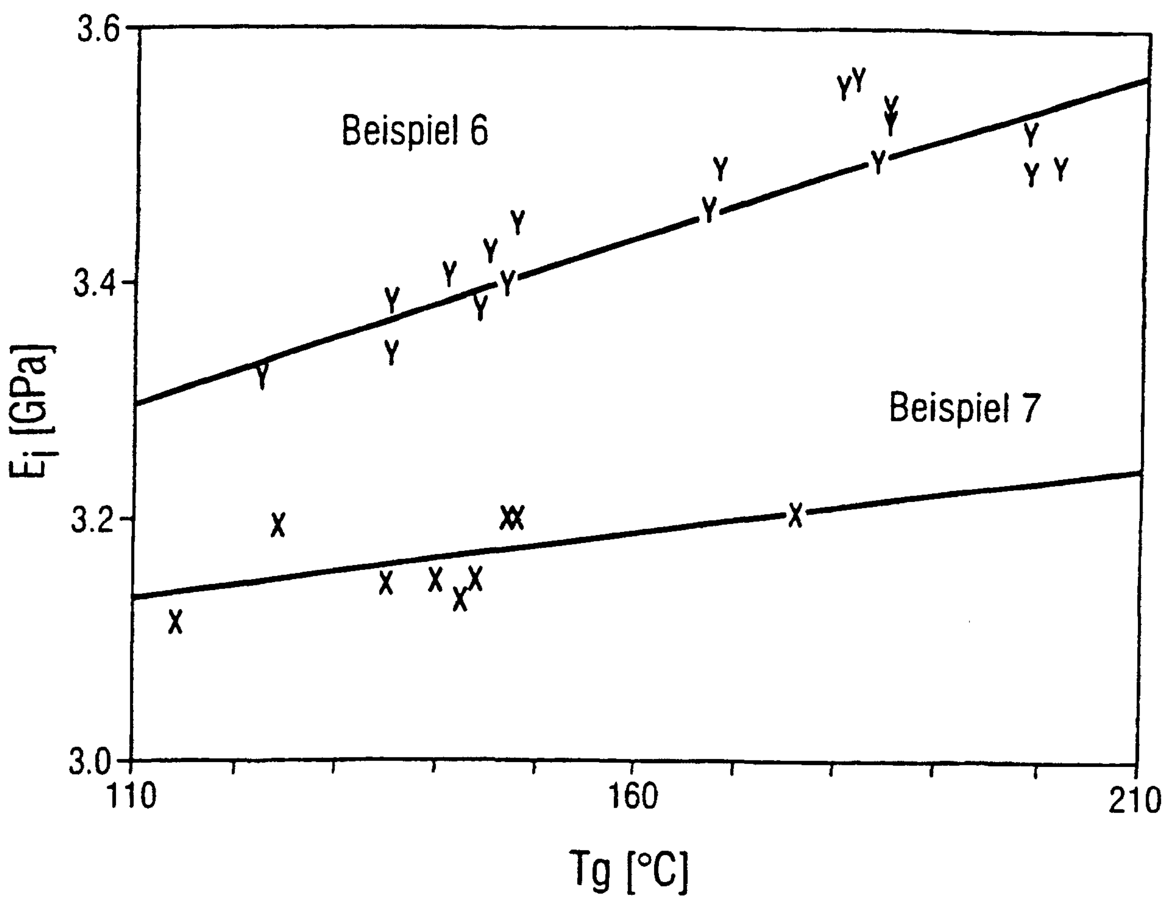

Fig. 6

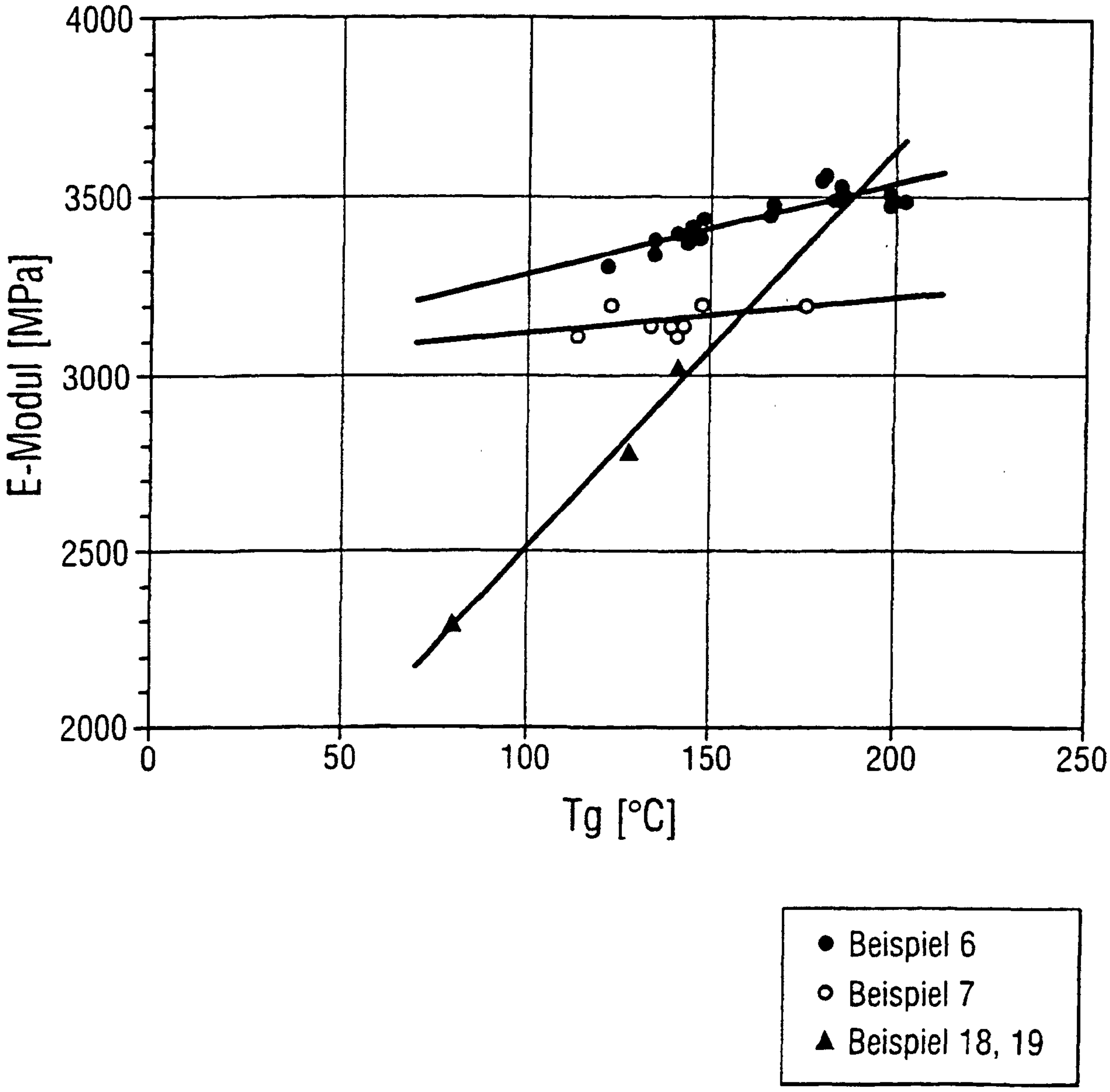
4000
3500
3000
2500
2000
E-Modul [MPa]
0
50
100
150
200
250
Tg [°C]
Beispiel 6
Beispiel 7
Beispiel 18, 19

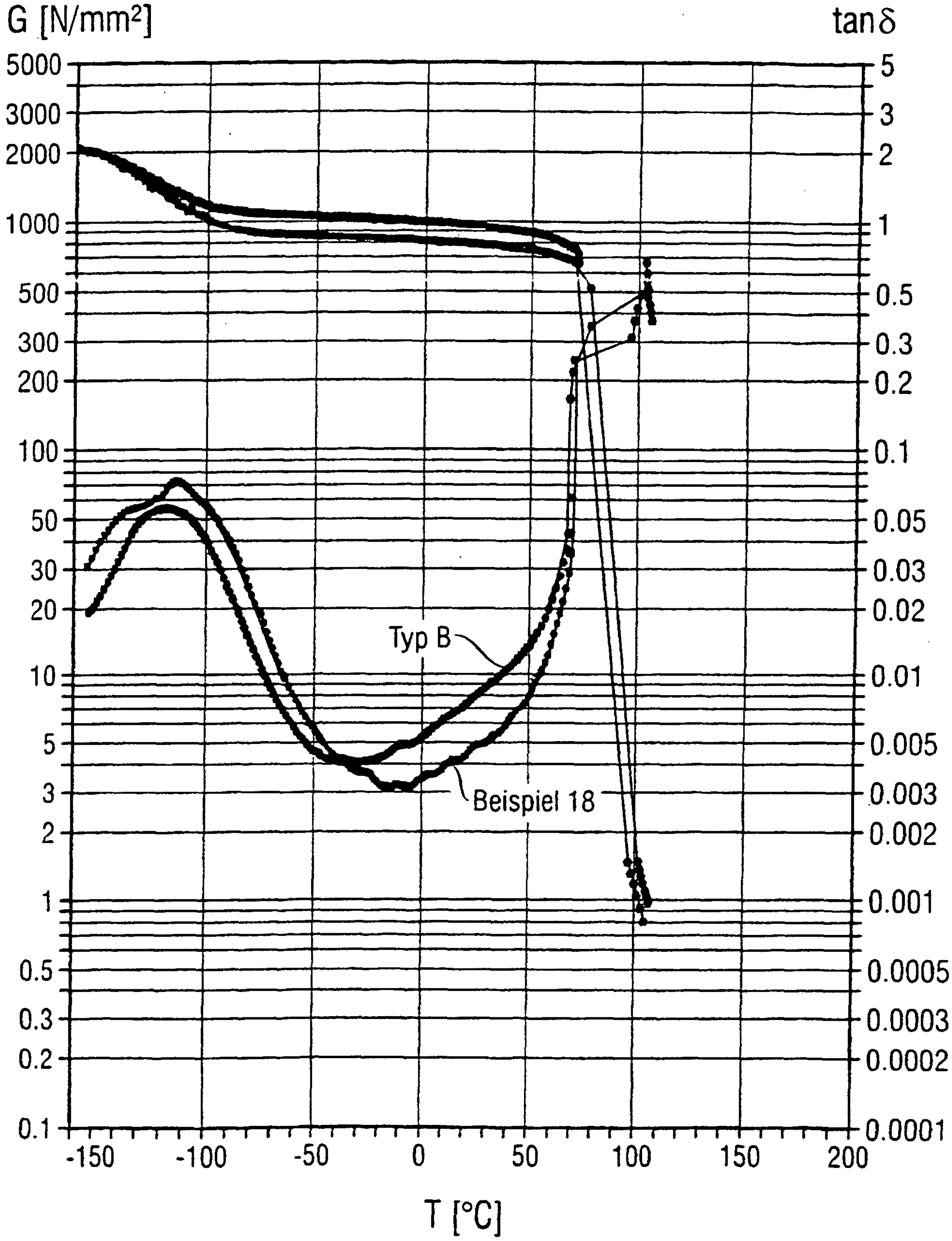
G [N/mm²]
tanδ
5000
3000
2000
1000
500
300
200
100
50
30
20
10
5
3
2
1
0.5
0.3
0.2
0.1
5
3
2
1
0.5
0.3
0.2
0.1
0.05
0.03
0.02
0.01
0.005
0.003
0.002
0.001
0.0005
0.0003
0.0002
0.0001
Typ B
Beispiel 18
-150
-100
-50
0
50
100
150
200
T [°C]

Fig. 7

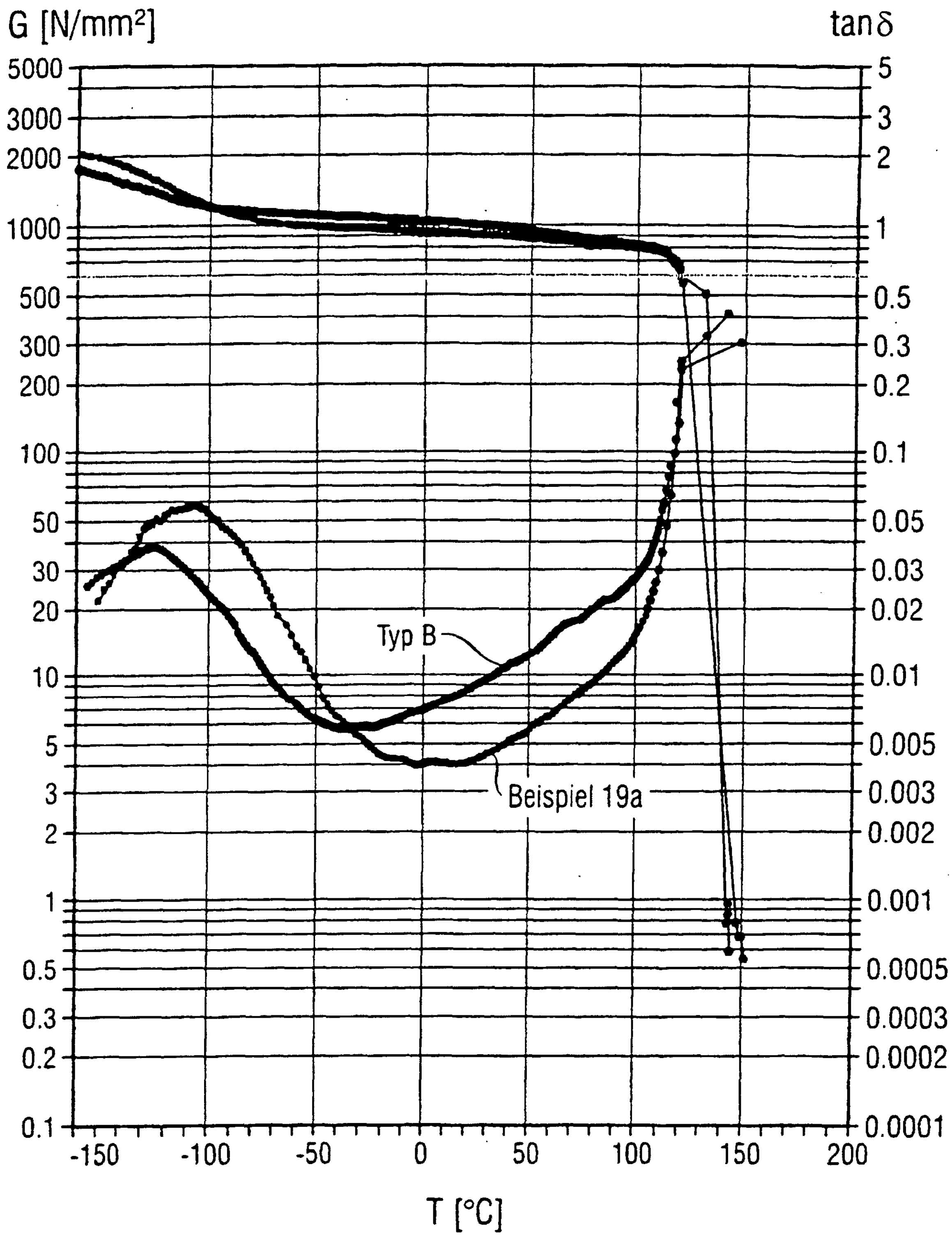
G [N/mm²]
tanδ
5000
3000
2000
1000
500
300
200
100
50
30
20
10
5
3
2
1
0.5
0.3
0.2
0.1
5
3
2
1
0.5
0.3
0.2
0.1
0.05
0.03
0.02
0.01
0.005
0.003
0.002
0.001
0.0005
0.0003
0.0002
0.0001
Typ B
Beispiel 19a
-150
-100
-50
0
50
100
150
200
T [°C]

Fig. 8

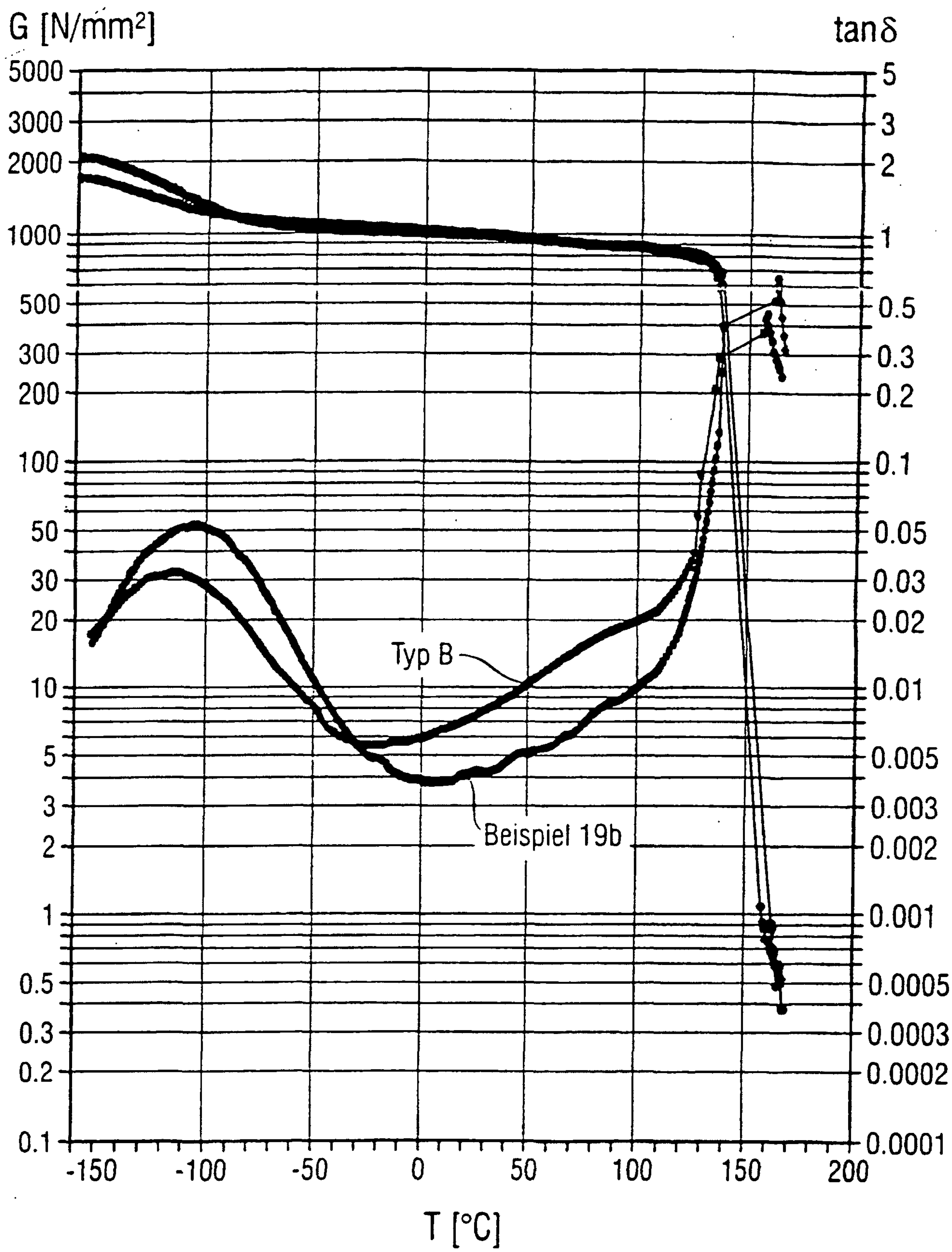
G [N/mm²]
tanδ
5000
3000
2000
1000
500
300
200
100
50
30
20
10
5
3
2
1
0.5
0.3
0.2
0.1
5
3
2
1
0.5
0.3
0.2
0.1
0.05
0.03
0.02
0.01
0.005
0.003
0.002
0.001
0.0005
0.0003
0.0002
0.0001
Typ B
Beispiel 19b
-150
-100
-50
0
50
100
150
200
T [°C]

Fig. 9